# EUROPEAN PATENT APPLICATION

(11) **EP 2 161 318 A1**
(43) Date of publication of application: **10.03.2010**
(21) Application number: 08765814.2
(22) Date of filing: 24.06.2008
(51) Int. Cl.: C09D 201/00, A01N 43/80, A01N 47/04, A01N 55/02, A01N 55/08, A01P 17/00, C09D 5/16, C09D 7/12, C09D 183/02

(54) **TRIPHENYLBORON COMPOUND-CONTAINING ANTIFOULING COATING COMPOSITION HAVING IMPROVED STABILITY, ANTIFOULING AGENT SET USED THEREFOR, AND METHOD FOR SUPPRESSING/CONTROLLING DECOMPOSITION OF TRIPHENYLBORON COMPOUND**

(30) Priority: 26.06.2007 JP 2007167656; 19.02.2008 JP 2008037953
(71) Applicant: CHUGOKU MARINE PAINTS, LTD., Ohtake-shi, Hiroshima 739-0652 (JP)
(72) Inventor: TANAKA, Hideyuki, Ohtake-shi Hiroshima 739-0652 (JP); OKADA, Masamitsu, Ohtake-shi Hiroshima 739-0652 (JP); HONMA, Mizuho, Ohtake-shi Hiroshima 739-0652 (JP); NISHI, Takeshi, Ohtake-shi Hiroshima 739-0652 (JP); NIIMOTO, Jyunji, Ohtake-shi Hiroshima 739-0652 (JP)
(74) Representative: HOFFMANN EITLE
(86) International application number: PCT/JP2008/061482
(87) International publication number: WO 2009/001829

(57) **Abstract**

An object of the present invention is to provide an antifouling coating material composition in which, though containing a triphenylboron compound as an antifouling agent, the triphenylboron compound is inhibited from being decomposed in production and long term storage and which is excellent in a storage stability and a static antifouling property of an antifouling coating film obtained therefrom.

The antifouling coating material composition of the present invention comprises at least (A) a coating film-forming resin and (B) a triphenylboron-amine complex (b1) as an antifouling agent, and it further comprises (C) an amine compound other than the triphenylboron-amine complex (b1) described above as a decomposition inhibitor for the above compound (b1). A content of the amine compound (C) described above is preferably a proportion of 1.0 to 210 parts by weight per 100 parts by weight of the component (b1).

## Description

### TECHNICAL FIELD

The present invention relates to a triphenylboron compound-containing antifouling coating material composition improved in stability, an antifouling agent set used for the same and a method for inhibiting and controlling decomposition of a triphenylboron compound.

### BACKGROUND ART

At present, boron compounds such as pyridine-triphenylboron and the like are widely used as antifouling agents for ship bottom coating materials and antifoulants for fishing nets. However, decomposition of a boron compound is expedited by a resin and other raw materials which are used in combination with the boron compound in preparing an antifouling coating material and by a rise in the temperature and mixing of moisture in production and storage, and a content of a triphenylboron compound is reduced in a certain case during storage of the antifouling coating material.
Such antifouling coating material is reduced in an antifouling activity due to decomposition of the triphenylboron compound, and therefore it does not sufficiently display an intrinsic antifouling performance in a certain case when forming a coating film.

The following materials have so far been known as compositions (antifouling coating materials and the like) containing triphenylboron-amine complexes (pyridine-triphenylboron and the like) and other amine compounds.

JP A 1998(H10)-77202 (patent document 1) discloses an antifouling composition for attached marine organisms prepared by dissolving an antifouling ingredient component comprising pyridine-triphenylborane and higher aliphatic mono- or polyamine having an amino group in an organic solvent as an invention having an object of obtaining an antifouling composition which elevates a solubility of pyridine-triphenylboron and which does not cause precipitation. It is described therein that the above antifouling composition has a good stability and does not form deposits (precipitates of triphenylboron) (evaluation in the examples: O) and that since a solubility of pyridine-triphenylborane in an organic solvent is enhanced, it can evenly be coated on a net fabric in a coating bath when used as an antifoulant for fishing nets. The higher aliphatic mono- or polyamine having an amino group described above includes a compound represented by the following formula, and to be specific, diamine, triamine and the like are shown as the examples thereof.

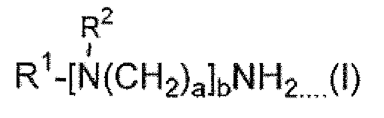

(In Formula (1), R¹ is a saturated or unsaturated hydrocarbon group having 8 to 28 carbon atoms which may be substituted with a β-hydroxy group or a saturated or unsaturated alkoxy lower alkyl group having 8 to 28 carbon atoms; R² is a hydrogen atom or a group represented by -(CH₂)ₐ₌₁₋₆NH₂; a is an integer of 1 to 6; and b is an integer of 0 to 4.)
JP A 1998(H10)-167914 (patent document 2) discloses an antifouling composition for attached marine organisms comprising, as antifouling active ingredients, pyridine-triphenylborane and higher aliphatic secondary or tertiary amine or a salt thereof as an invention having an object of enhancing an antifouling property. It is described therein that when the above antifouling composition (for example, a composition prepared by blending 15 parts of an acryl resin, 10 parts of pyridine-triphenylborane, 5 parts of di-n-coconut alkylamine and other components (total 100 parts) in Example 1) is used for fishing nets, ship bottoms and the like by coating it thereon, a so-called synergistic effect is displayed and that an antifouling effect thereof can be continued.

The higher aliphatic secondary or tertiary amine (I) described above includes a compound represented by the following formula, and to be specific, di-n-coconut alkylamine, dimethyl beef tallow alkylamine, di-n-octylamine, dimethylhexadecylamine and the like are used.

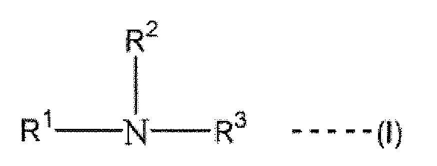

(In Formula (1), R¹, R² and R³ may be the same as or different from each other and represent a saturated or unsaturated aliphatic hydrocarbon group having 1 to 28 carbon atoms which may be substituted with one hydroxyl group or alkoxy group (provided that one of R¹, R² and R³ may be a hydrogen atom).)
JP A 1998(H10)-182322 (patent document 3) discloses an antifouling composition for attached marine organisms comprising, as an antifouling active ingredient,a reaction product obtained by reacting in advance triphenylborane or an alkali metal hydroxide adduct thereof with specific higher aliphatic polyamine or a salt thereof as an invention having an object of enhancing an antifouling property. It is described therein that the above antifoulant displays a so-called synergistic effect and that an antifouling effect thereof has continuity.

JP A 1998(H10)-182323 (patent document 4) discloses an antifouling composition for attached marine organisms comprising, as an antifouling active ingredient, a reaction product obtained by reacting in advance triphenylborane or an alkali metal hydroxide adduct thereof with specific higher aliphatic secondary or tertiary amine or a salt thereof as an invention having an object of enhancing an antifouling property. It is described therein that the above antifoulant displays a so-called synergistic effect and that an antifouling effect thereof has continuity.

JP A 2004-244395 (patent document 5) discloses a composition comprising (4-isopropylpyridinyl)methyldiphenylboron (IPMB) and primary alkylamine having 8 to 18 carbon atoms as an invention having an object of obtaining an antifouling composition in which precipitates are not produced over a long period of time and in which stirring is not required before net coating work, considering particularly application thereof as an antifoulant for fishing nets. It is described therein that IPMB contained in the above composition is excellent in stability and does not lose an effect thereof even after stored over a long period of time, and that use of the above antifouling composition makes it possible to prevent organisms from being adhered over a long period of time.

Further, n-octylamine, 2-ethylhexylamine, n-dodecylamine, n-octadecylamine and the like are shown as the examples of the primary alkylamine described above (paragraph [0019] of Patent document 5), and it is described therein that these amines are added usually in an amount of 0.5 to 2 moles based on 1 mole of IPMB, that if the above amine amount is less than 0.5 mole, the antifouling effect after stored over a long period of time is reduced and that if it exceeds 2 moles, the stability and the antifouling property are not expected to be improved further more (paragraph [0009] of Patent document 5).

However, the finding and technical idea that boron compounds contained in antifouling coating material compositions and the like are inhibited from being decomposed (improved in stability) by adding other amine compounds to triphenylboron-amine complexes such as pyridine-triphenylboron are not disclosed in any of the patent documents 1 to 5 described above. That is, it is neither described nor indicated therein that since in antifouling coating material compositions produced by using the above specific two components in combination, decomposition of the boron compounds caused by effects of combination thereof with other components such as a resin and the like, a rise in the temperature during production and storage and mixing of moisture is inhibited, the antifouling coating material compositions are excellent in a stability of an antifouling activity in storing for a long period and a long term antifouling property of an antifouling coating film obtained therefrom.

JP A 2000-143417 (patent document 6) discloses underwater antifouling coating materials prepared by blending underwater antifouling coating materials (antifoulants for fishing nets, antifouling coating materials for ship bottom and the like) comprising a compound as an active ingredient having a triphenylboron skeleton with at least one compound selected from compounds having a -CONH- structure in a molecule and compounds having a heterocycle having 3 or more nitrogen atoms in a molecule (for example, tolyltriazole, 3-(N-salicyloyl)amino-1,2,4-triazole and 1,2,3-benzotriazole). It is described therein that even if the above underwater antifouling coating material is further blended with cuprous oxide or copper rhodanateand the triphenylboron compound is brought into contact with them, the triphenylboron skeleton is scarcely decomposed and the underwater antifouling coating material can exhibit an excellent antifouling effect even after stored over a long period of time.

However, in the invention described above in which the compounds having a -CONH- structure in a molecule and the compounds of a triazole base are used, room for improvement is left in terms of an effect to inhibit decomposition of a triphenylboron-amine complex.

On the other hand, a method in which pyridine is added in quantitatively determining pyridine-triphenylboron (PIPB) contained in artificial seawater with HPLC is described in "Determination of Release Rate of Pyridine-triphenylborane (PTPB) from Copper-free Antifouling Paints" (J. Jpn. Soc. Colour Master,78 [2], p. 50 to 57 (2005) by Kazunobu Takahashi et al.: non-patent document 1).

However, it is neither specifically described nor indicated in the non-patent document 1 described above to what extent the decomposition of PTPB is inhibited and benzene is inhibited from being produced according to an addition amount and the kind thereof when pyridine is actually added to an antifouling coating material comprising PTPB and, if necessary, a coating film-forming resin, and whether or not a continuous and high antifouling performance is displayed when an antifouling coating film is formed from the above antifouling coating material. In addition thereto, it is not even indicated in the above non-patent document 1 whether or not the same effect as that of pyridine is obtained when amine compounds other than pyridine are added and how the effects thereof are changed according to an addition amount and the kind thereof.
Patent document 1: JP A 1998(H10)-77202
Patent document 2: JP A 1998(H10)-167914
Patent document 3: JP A 1998(H10)-182322
Patent document 4: JP A 1998(H10)-182323
Patent document 5: JP A 2004-244395
Patent document 6: JP A 2000-143417
Non-patent document 1: Kazunobu Takahashi et al. "Determination of Release Rate of Pyridine-triphenylborane (PTPB) from Copper-free Antifouling Paints" (J. Jpn. Soc. Colour Master ,78 [2], p. 50 to 57 (2005)

### DISCLOSURE OF THE INVENTION

### Problem to be solved by the invention

The present invention intends to solve the foregoing problems involved in the conventional techniques, and an object of the present invention is to provide an antifouling coating material composition in which decomposition of a triphenylboron compound contained therein is inhibited and which is excellent in a stability of an antifouling activity thereof in storing over a long period of time and forms an antifouling coating film having an excellent long term antifouling property. Further, an object thereof as another aspect of the present invention is to provide an antifouling agent set which can be used for producing an antifouling coating material composition having the excellent performances described above and a method for inhibiting and controlling decomposition of a triphenylboron-amine complex.

### Means to solve the problem

[1] The antifouling coating material composition according to the present invention is an antifouling coating material composition comprising a coating film-forming resin (A) and a triphenylboron-amine complex (b1) as an antifouling agent (B), wherein it further comprises an amine compound (C) (excluding the triphenylboron-amine complex (b1)) as a decomposition inhibitor for the triphenylboron-amine complex (b1).

[2] The antifouling coating material composition according to the present invention further comprises preferably, in addition to the components (A), (B) and (C) described above, at least one component selected from the group consisting of an organic antifouing agent (b2) other than the triphenylboron-amine complex (b1), a color pigment (D), an extender pigment (E), an inorganic dehydrating agent (F), a plasticizer (G), an anti-sagging/anti-settling agent (thixotropic agent) (H), an oxyalkylene group-containing linear organopolysiloxane (I) and at least one plastic resin selected from polybutenes, paraffins, vaselines and dialkyl sulfide compounds (J).

[3] The amine compound (C) in the antifouling coating material composition described above is contained preferably in an amount of 1 to 210 parts by weight per 100 parts by weight of the triphenylboron-amine complex (b1).

[4] The triphenylboron-amine complex (b1) in the antifouling coating material composition described above is contained preferably in an amount of 5 to 150 parts by weight per 100 parts by weight of the coating film-forming resin (A) (solid content).

[5] The amine compound (C) described above is preferably at least one selected from the group consisting of ammonia, heterocyclic amines, cross-linked cyclic amines, aliphatic amines which may contain an alkoxy group, alicyclic amines, aromatic amines and amino alcohols.

[6] The amine compound (C) is preferably at least one selected from the group consisting of primary amines, secondary amines and tertiary amines.

[7] When the heterocyclic amine given in [5] is used as the amine compound (C), the heterocyclic amine is preferably a six-membered heterocyclic compound having 1 to 3 nitrogen atoms.

[8] The six-membered heterocyclic compound described in [7] is preferably at least one selected from the group consisting of pyridines represented by pyridine (the pyridines may be incorporated into a polymer), pyridazines, pyrimidines, pyrazines, piperidines, piperazines, morpholines, picolines, quinolines represented by quinoline and isoquinoline, and quinaldines. The above six-membered heterocyclic compounds may be substituted with halogen, a lower alkyl group (1 to 3 carbon atoms), a phenyl group, an acetyl group, an amino group, a carboxyl group, a hydroxyl group or an alcohol group or may not be substituted (non-substituted).

[9] When the heterocyclic gamine given in [5] described above is used as the amine compound (C), the heterocyclic amine is preferably as well a five-membered heterocyclic compound having 1 to 3 nitrogen atoms.

[10] The five-membered heterocyclic compound given in [9] is preferably at least one selected from the group consisting of pyrroles, pyrrolines, indoles, isoindoles, imidazoles represented by imidazole, benzimidazoles, thiazoles and isothiazoles. The above five-membered heterocyclic compounds may be substituted with halogen, a lower alkyl group (1 to 3 carbon atoms), a phenyl group, an acetyl group, an amino group, a carboxyl group, a hydroxyl group or an alcohol group or may not be substituted (non-substituted).

[11] When the cross-linked cyclic amine given in [5] described above is used as the amine compound (C), the cross-linked cyclic amine is preferably at least one of quinuclidines and triethylenediamines.

[12] When at least one amine compound selected from the group consisting of primary amines, secondary amines and tertiary amines given in [6] described above is used as the amine compound (C), it is preferably at least one selected from:
at least one primary amine selected from n-propylamine, n-butylamine, n-hexylamine, n-octylamine, n-decylamine, n-dodecylamine, n-tridecylamine, n-tetradecylamine, n-hexadecylamine, n-octadecylamine, aniline and toluidine;
at least one secondary amine selected from di-n-butylamine, di-n-hexylamine, di-n-octylamine, di-n-decylamine, di-n-dodecylamine, di-n-tridecylamine, di-n-tetradecylamine, di-n-hexadecylamine, di-n-octadecylamine and diphenylamine; and
at least one tertiary amine selected from tri-n-propylamine, tri-n-hexylamine, tri-n-octylamine, tri-n-decylamine, tri-n-dodecylamine, tri-n-tridecylamine, tri-n-tetradecylamine, tri-n-hexadecylamine, tri-n-octadecylamine and triphenylamine. Among them, the primary amines are preferred, and n-octadecylamine is particularly preferred.

[13] The amine compound (C) given in [5] described above is preferably as well an alkoxy group-containing amine represented by the following Formula (I):

H₂N-R¹-O-R² (I)

(in Formula (I), R¹ represents a linear or branched alkylene group having 1 to 8 carbon atoms or a phenylene group, and R² represents a linear or branched alkyl group having 1 to 18 carbon atoms).
[14] The alkoxy group-containing amine represented by Formula (I) in [13] described above is preferably at least one selected from the group consisting of 3-ethoxypropylamine, 3-butoxypropylamine, 3-(2-ethylhexyloxy)propylamine, 3-lauryloxypropylamine, 3-stearyloxypropylamine, 4-(2-ethylhexyloxy)butylamine, 4-lauryloxybutylamine, 8-ethoxyoctylamine, 8-(2-ethylhexyloxy)octylamine, 2-ethylhexyloxyphenylamine and lauryloxyphenylamine, and 3-(2-ethylhexyloxy)propylamine is particularly preferred.

[15] The amine compound (C) given in [5] described above is preferably as well amino alcohol represented by any of the following Formulas (II), (III) and (IV):

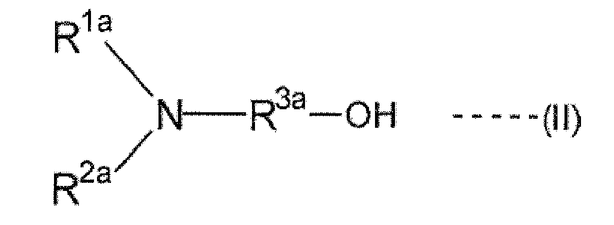

(in Formula (II), R^{1a} and R^{2a} may be the same as or different from each other and are a hydrogen atom, an alkyl group or alkenyl group having 1 to 24 carbon atoms, a cycloalkyl group having 3 to 12 carbon atoms, an alkylallyl group (an alkyl group part has 1 to 24 carbon atoms), an aralkyl group (an alkylene group part has 1 to 24 carbon atoms) or an allyl group, and R^{3a} is an alkylene group having 2 to 6 carbon atoms).

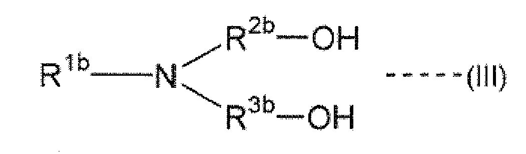

(in Formula (III), R^{1b} is a hydrogen atom, an alkyl group or alkenyl group having 1 to 24 carbon atoms, a cycloalkyl group having 3 to 12 carbon atoms, an alkylallyl group (an alkyl group part has 1 to 24 carbon atoms), an aralkyl group (an alkylene group part has 1 to 24 carbon atoms) or an allyl group, and R^{2b} and R^{3b} may be the same as or different from each other and are an alkylene group having 2 to 6 carbon atoms).

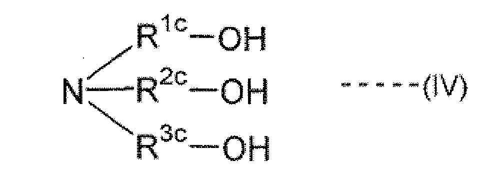

(in Formula (IV), R^{1c}, R^{2c} and R^{3c} may be the same as or different from each other and are an alkylene group having 2 to 6 carbon atoms).
[16] In the present invention, when the amine compound (C) described above is amino alcohol, this amino alcohol is preferably at least one selected from monoethanolamine, diethanolamine, triethanolamine, n-propyl alcohol amine, din-propyl alcohol amine, tri-propyl alcohol amine, i-propyl alcohol amine, di-1-propyl alcohol amine and tri-i-propyl alcohol amine, and monoethanolamine included in Formula (II) is particularly preferred.

[17] On the other hand, the triphenylboron-amine complex (b1) contained in the antifouling coating material composition according to the present invention is preferably a complex of triphenylboron with pyridine (pyridine-triphenylboron).

[18] The triphenylboron-amine complex (b1) contained in the antifouling coating material composition according to the present invention is preferably as well a complex of triphenylboron with alkylamine.

[19] The alkylamine forming the complex with triphenylboron in [18] described above is preferably at least one selected from the group consisting of n-propylamine, n-butylamine, n-hexylamine, n-octylamine, n-decylamine, n-dodecylamine, n-tridecylamine, n-tetradecylamine, n-hexadecylamine, n-octadecylamine, aniline and toluidine, and n-octadecylamine is particularly preferred.

[20] The triphenylboron-amine complex (b1) contained in the antifouling coating material composition according to the present invention is preferably as well a complex of triphenylboron with alkoxy group-containing amine.

[21] The alkoxy group-containing amine forming the complex with triphenylboron in [20] described above is preferably a compound represented by the following Formula (I):

H₂N-R¹-O-R² (I)

(in Formula (I), R¹ represents a linear or branched alkylene group having 1 to 8 carbon atoms or a phenylene group, and R² represents a linear or branched alkyl group having 1 to 8 carbon atoms).
[22] The alkoxy group-containing amine forming the complex with triphenylboron in [20] to [21] described above is preferably at least one selected from the group consisting of 3-ethoxypropylamine, 3-butoxypropylamine, 3-(2-ethylhexyloxy)propylamine, 3-lauryloxypropylamine, 3-stearyloxypropylamine, 4-(2-ethylhexyloxy)butylamine, 4-lauryloxybutylamine, 8-ethoxyoctylamine, 8-(2-ethylhexyloxy)octylamine, 2-ethylhexyloxyphenylamine and lauryloxyphenylamine, and 3-(2-ethylhexyloxy)propylamine is particularly preferred.

[23] The amine compound (C) is contained preferably in an amount of 0.1 to 3 moles per mole of the triphenylboron-amine complex (b1) in the antifouling coating material composition according to the present invention.

[24] The coating film-forming resin (A) contained in the antifouling coating material composition as described in any of [1] to [23] described above is preferably at least one selected from the group consisting of (meth)acrylic acid metal salt copolymers, trialkylsilyl acrylate (co)polymers, vinyl chloride base resins, vinyl chloride-vinyl acetate copolymers, vinyl chloride-vinyl isobutyl ether copolymers, chlorinated rubber base resins, chlorinated polyethylene resins, chlorinated polypropylene resins, acryl resins, styrene-butadiene base resins, polyester base resins, epoxy base resins, phenol base resins, synthetic rubbers, silicone rubbers, silicone base resins, petroleum base resins, rosin ester base resins, rosin base soaps and rosin.

[25] The antifouling coating material composition as described in [1] to [24] further comprises preferably, in addition to the triphenylboron•amine complex (b1), a different organic antifouling agent (b2) as the antifouling agent (B).

[26] The different organic antifouling agent (b2) in [25] described above is preferably at least one selected from the group consisting of 2-pyridinethiol-1-oxide copper salt (copper pyrithione), 2-pyridinethiol-1-oxide zinc salt (zinc pyrithione), 4,5-dichloro-2-n-octyl-4-isothiazoline-3-one, N,N-dimethyldichlorophenylurea, 2,4,6-trichlorophenylmaleimide, 2-methylthio-4-tert-butylamino-6-cyclopropyl-S-triazine, 2,4,5,6-tetrachloroisophthalonitrile, bisdimethyldithiocarbamoylzinc ethylenebisdithiocarbamate, chloromethyl-n-octyl disulfide, N,N'-dimethyl-N'-phenyl-(N-fluorodichloromethylthio)sulfamide, N,N'-dimethyl-N'-tolyl-(N-fluorodichloromethylthio)sulfamide, tetraalkylthiuram disulfide (the alkyl group has 1 to 5 carbon atoms), zinc dimethyldithiocarbamate, zinc ethylenebisdithiocarbamate, 2,3-dichloro-N-(2',6'-diethylphenyl)maleimide, 2,3-dichloro-N-(2'-ethyl-6'-methylphenyl)maleimide and zinc sulfide.

[27] The antifouling coating material composition as described in [1] to [26] further comprises preferably, in addition to the components described above, at least one color pigment selected from the group consisting of red iron oxide, titan white, yellow iron oxide and organic pigments as the color pigment (D) in an amount of 0.05 to 125 parts by weight per 100 parts by weight of the coating film-forming resin (A) (solid content).

[28] The antifouling coating material composition as described in [1] to [27] further comprises preferably, in addition to the components described above, at least one extender pigment selected from the group consisting of talc, silica, mica, clay, zinc oxide, calcium carbonate, kaolin, alumina white, white carbon, aluminum hydroxide, magnesium carbonate, barium carbonate, barium sulfate and zinc sulfide as the extender pigment (E) in an amount of 2.5 to 250 parts by weight per 100 parts by weight of the coating film-forming resin (A) (solid content).

[29] The antifouling coating material composition as described in [1] to [28] further comprises preferably, in addition to the components described above, at least one inorganic dehydrating agent selected from the group consisting of anhydrite and gypsum hemihydrate (casting plaster) as the inorganic dehydrating agent (F) in an amount of 1.0 to 25 parts by weight per 100 parts by weight of the coating film-forming resin (A) (solid content).

[30] The antifouling coating material composition as described in [1] to [29] further comprises preferably, in addition to the components described above, at least one plasticizer selected from the group consisting of chlorinated paraffin and terpenephenol as the plasticizer (G) in an amount of 0.5 to 50 parts by weight per 100 parts by weight of the coating film-forming resin (A) (solid content).

[31] The antifouling coating material composition as described in [1] to [30] further comprises preferably, in addition to the components described above, at least one anti-sagging/anti-settling agent selected from the group consisting of respective amine salts, stearate salts, lecithin salts and alkylsulfonic acid salts of Al, Ca and Zn (organic clay base wax); polyethylene wax, amide wax, hydrogenated castor oil wax and polyamide wax (organic wax); mixtures of the organic clay base wax and the organic wax described above; and synthetic fine powder silica; polyethylene oxide base wax; and fatty acid amide wax as the anti-sagging/anti-settling agent (thixotropic agent) (H) in an amount of 0.25 to 50 parts by weight per 100 parts by weight of the coating film-forming resin (A) (solid content).

[32] The antifouling coating material composition as described in [1] to [31] further comprises preferably, in addition to the components described above, a compound represented by the following Formula [1a] in which a hydrophile-lipophile balance (HLB) is 2 to 12 as the oxyalkylene group-containing linear organopolysiloxane (I) in an amount of 0.5 to 200 parts by weight per 100 parts by weight of the coating film-forming resin (A) (solid content):

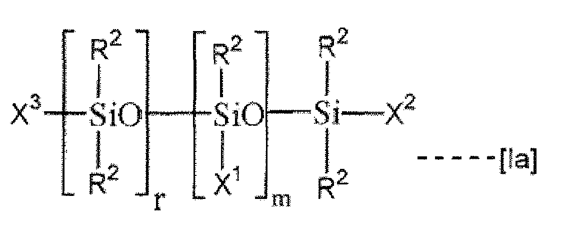

(in Formula [1a], X¹, X² and X³ each represent independently a polyether group: -R-A-(R³O)ₙ-R⁴ (R represents an alkylene group having 1 to 5 carbon atoms; A represents a single bond or an oxygen atom; R³ represents an alkylene group having 1 to 5 carbon atoms; R⁴ represents an alkyl group having 1 to 5 carbon atoms or hydrogen; and n represents a repeating unit number) or an alkyl group having 1 to 5 carbon atoms; at least one of X¹, X² and X³ is the polyether group described above: -R-A-(R³O)ₙ-R⁴; R² represents an alkyl group having 1 to 3 carbon atoms; r and m each represent a repeating unit total number, and a bonding order of the repeating units [-Si(R²)₂O-] and [-Si(R²) (X¹)O-] may be optional).

[33] The antifouling coating material composition as described in [1] to [32] further comprises preferably, if necessary, at least one of polybutenes, paraffins, vaselines and a dialkyl sulfide compound represented by the following Formula (VI) as the plastic resin (J) in addition to the components described above in an amount of 5 to 100 parts by weight per 100 parts by weight of the coating film-forming resin (A) (solid content):

R^{3d}-(S)ₙ-R^{3e} (VI)

(in Formula (VI), plural R^{3d} and R^{3e} may be the same as or different from each other and each represent a linear or branched alkyl group having 1 to 20 carbon atoms, and n represents an integer of 1 to 20).
[34] The antifouling agent set according to the present invention is characterized by comprising a triphenylboron-amine complex (b1) as an antifouling agent (B) and an amine compound (C) (excluding the triphenylboron-amine complex (b1); hereinafter the same shall apply) as a decomposition inhibitor for the triphenylboron-amine complex (b1), and it further comprises, if necessary, a solvent (M) which can dissolve the above components (b1) and (C); and the amine compound (C) is contained in an amount of 1 to 210 parts by weight per 100 parts by weight of the triphenylboron-amine complex (b1).

[35] The triphenylboron-amine complex (b1) contained in the antifouling agent set described in [34] is preferably the same as the triphenylboron-amine complex used for the antifouling coating material composition as described in any of [17] to [22].

[36] The amine compound (C) contained in the antifouling agent set described in [34] to [35] is preferably the same as the amine compound used for the antifouling coating material composition as described in any of [5] to [16].

[37] The antifouling coating film according to the present invention is characterized by comprising the antifouling coating material composition as described in any of [1] to [33].

[38] The substrate provided with a coating film according to the present invention is characterized by that a surface of the substrate is coated with a coating film obtained by curing the antifouling coating material composition as described in any of [1] to [33].

[39] The antifouling substrate according to the present invention is characterized by that a surface of the substrate brought into contact with seawater or refined water is coated with a coating film obtained by curing the antifouling coating material composition as described in any of [1] to [33].

[40] The antifouling substrate according to the present invention is preferably any of an underwater structure, a ship outside plate, a fishing net and a fishing equipment.

[41] The method for forming a coating film on a surface of a substrate according to the present invention is characterized by coating or impregnating a surface of a substrate with the antifouling coating material composition as described any of [1] to [33] and then curing it to form a coating film.

[42] The antifouling method for a substrate according to the present invention is characterized by coating or impregnating a surface of a substrate with the antifouling coating material composition as described in any of [1] to [33] and then curing the above antifouling coating material to form an antifouling coating film.

[43] In the antifouling method for a substrate according to the present invention, the substrate described above is preferably any of an underwater structure, a ship outside plate, a fishing net and a fishing equipment.

[44] The inhibiting and controlling method for decomposition of a triphenylboron-amine complex according to the present invention is characterized by adding the amine compound (C) (excluding the triphenylboron-amine complex (b1)) to the triphenylboron-amine complex (b1) or a material containing the triphenylboron-amine complex (b1).

[45] In the inhibiting and controlling method for decomposition of a triphenylboron-amine complex as described in [44], the triphenylboron-amine complex (b1) described above is preferably the triphenylboron-amine complex as described in any of [17] to [22].

[46] The amine compound (C) used in the inhibiting and controlling method for decomposition of a triphenylboron-amine complex as described in [44] to [45] is preferably the same as the amine compound used for the antifouling coating material composition as described in any of [5] to [16].

An addition amount of the amine compound (C) is preferably the amount as described in [3] in terms of a weight ratio (that is, an amount of 1 to 210 parts by weight per 100 parts by weight of the triphenylboron-amine complex (b1)) and the amount as described in [23] in terms of a mole ratio (that is, an amount of 0.1 to 3 moles per mole by weight of the triphenylboron-amine complex (b1)).

### Effect of the invention

The antifouling coating material composition according to the present invention is inhibited, though containing the triphenylboron compound (triphenylboron-amine complex) as the antifouling agent, in decomposition of the triphenylboron compound in storing, and it is referred to as an antifouling coating material having an excellent storage stability. The above antifouling coating material is applied onto parts of ships, fishing nets, other fishing materials and the like which are brought into contact with seawater, whereby an antifouling coating film having an excellent static antifouling property is obtained.

If the antifouling agent set according to the present invention is blended as an antifouling agent with an antifouling coating material, decomposition of the triphenylboron compound in storing is inhibited, and an antifouling coating material which can form an antifouling coating film having an excellent static antifouling property is obtained.

According to the inhibiting and controlling method for decomposition of a triphenylboron-amine complex related to the present invention, decomposition of the triphenylboron-amine complex (b1) can readily and efficiently be inhibited, and as a result thereof, production of benzene and generation of benzene odor which are brought about by decomposition of the triphenylboron-amine complex (b1) can notably be inhibited and reduced. In particular, the effects of the triphenylboron-amine complex (b1) as an antifouling agent are continued favorably as well during storage and preservation of the antifouling coating material composition by adding the amine compound (C) to the triphenylboron-amine complex (b1) contained in the antifouling coating material composition.
As a result thereof, an antifouling effect of the coating film formed from the antifouling coating material can be continued over a long period of time.

### BEST MODE FOR CARRYING OUT THE INVENTION

The triphenylboron compound-containing antifouling coating material composition (hereinafter referred to as the antifouling coating material) according to the present invention which is improved in stability and the antifouling agent set which can be used for producing the same shall specifically be explained below.

### Antifouling coating material composition and antifouling agent set used for preparing the same

The antifouling coating material composition according to the present invention comprises the coating film-forming resin (A), the specific triphenylboron-amine complex (b1) as the antifouling agent (B) and the amine compound (C) (excluding the triphenylboron-amine complex (b1); hereinafter the same shall apply) as the decomposition inhibitor for the triphenylboron-amine complex (b1) described above.

The antifouling agent set according to the present invention comprises the specific triphenylboron-amine complex (b1) as the antifouling agent (B) and the amine compound (C) as the decomposition inhibitor for the triphenylboron-amine complex (b1) described above.

The solvent (M) which can dissolve the triphenylboron-amine complex (b1) and/or the amine compound (C), preferably both of the above components (b1) and (C), may further be contained, if necessary, in the above antifouling coating material composition and antifouling agent set.

Further, at least one component of the other organic antifouling agent (b2), the color pigment (D), the extender pigment (E), the inorganic dehydrating agent (F), the plasticizer (G), the anti-sagging/anti-settling agent (thixotropic agent) (H), the oxyalkylene group-containing linear organopolysiloxane (I) and the plastic resin (J) which are described later may further be contained, if necessary, in the above antifouling coating material composition.

The respective components shall be explained below in order.

### - Coating film-forming resin (A):

The coating film-forming resin (A) contained in the antifouling coating material composition according to the present invention shall not specifically be restricted as long as it is a resin blended with conventional ship bottom coating materials, antifoulants for fishing nets and the like. Resins which are hydrolyzed in seawater (e.g., a case of (meth)acrylic acid metal salt base copolymers) or dissolved therein (e.g., a case of rosin) to thereby allow a fresh coating film surface to appear (self renewability of coating film) and which can release an antifouling agent contained in the coating film to exhibit an antifouling effect can be used, and in addition thereto, non-water soluble and non-hydrolyzable resins (e.g., vinyl chloride base resins) can be used as well.

The coating film-forming resin (A) includes, for example, (meth)acrylic acid metal salt copolymers, trialkylsilyl acrylate (co)polymers, vinyl chloride base resins, vinyl chloride-vinyl acetate copolymers, vinyl chloride-vinyl isobutyl ether copolymers, chlorinated rubber base resins, chlorinated polyethylene resins, chlorinated polypropylene resins, acryl resins, styrene-butadiene base resins, polyester base resins, epoxy base resins, phenol base resins, synthetic rubbers, silicone rubbers, silicone base resins, petroleum base resins, rosin ester base resins, rosin base soaps, rosin and the like. They may be used alone or in combination of two or more kinds thereof.

Further, in the antifouling coating material composition according to the present invention, the resins described above can be used in combination with a monobasic acid. The monobasic acid includes, for example, rosin, versatic acid, naphthenic acid, triphenylisobutenylcyclohexanecarboxylic acid (e.g., trade name: A-3000, manufactured by Yasuhara Chemical Co., Ltd.) and the like.

An amount of the coating film-forming resin (A) (solid content) contained in the antifouling coating material composition according to the present invention is usually 5 to 35 % by weight, preferably 15 to 25 % by weight considering the coating property and a surface flatness of the coating film. The monobasic acid can be blended, if necessary, with the coating material in an amount of 0.1 to 20 % by weight, preferably 0.5 to 15 % by weight considering the physical properties of the coating film. A blend ratio of the resin to the monobasic acid shall not specifically be restricted, and the monobasic acid can be blended in an amount of usually 0.1 to 250 parts by weight, preferably 0.5 to 200 parts by weight per 100 parts by weight of the coating film-forming resin (A) (solid content).

### - Triphenylboron-amine complex (b1):

The antifouling coating material composition according to the present invention is blended with at least the triphenylboron-amine complex (b1) (particularly preferably pyridine-triphenylboron) as the antifouling agent (B).

Capable of being used as the triphenylboron-amine complex (b1) are triphenylboron-amine complexes (b1) represented by the following Formula [Va] described in paragraph [0041] of JP A 2006-188453 and paragraphs [0049] to [0053] of JP A 2006-176785 which are disclosed by the present applicants:

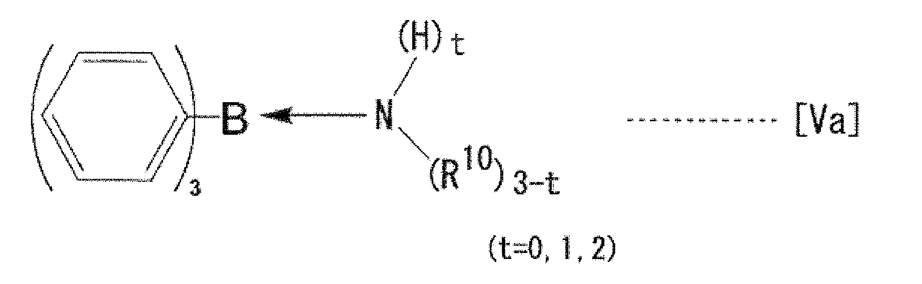

In Formula [Va], R¹⁰ represents an alkyl group having 3 to 30 carbon atoms which may be linear or branched or an alkoxy group represented by -R¹-O-R² (R¹ represents a linear or branched alkylene group having 1 to 8 carbon atoms or a phenylene group, and R² represents a linear or branched allyl group having 1 to 18 carbon atoms); and t is 0, 1 or 2.

Further, a triphenylboron-pyridine (pyridine-triphenylborane) base compound represented by the following Formula [Vb] can be used as well for the triphenylboron-amine complex (b1):

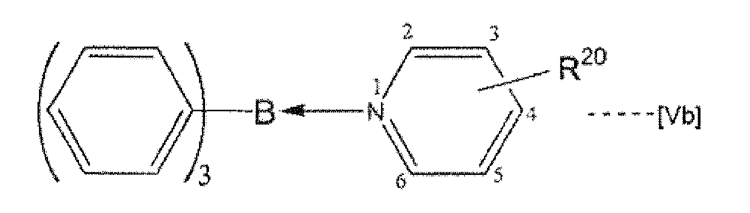

In Formula [Vb], R²⁰ represents H, a halogen atom (F, Cl, Br or I) or an alkyl group having 1 to 5 carbon atoms which may be linear or branched).

That is, the triphenylboron-amine complex (b1) represented by Formula [Va] or [Vb] is a complex formed between triphenylboron and amines.

The amines used in forming the triphenylboron-amine complex (b1) represented by Formula [Va] or [Vb] are compounds represented by the following Formula [Va-1] or [Vb-1] (R¹⁰ and R²⁰ are defined in the same manner as in Formulas [Va] and [Vb]). They may be any of aliphatic amines, alicyclic amines, aromatic amines, heterocyclic amines, and these amines may be any of primary amines, secondary amines and tertiary amines and are preferably the primary amine in terms of a stability of the triphenylboron-amine complex (b1).

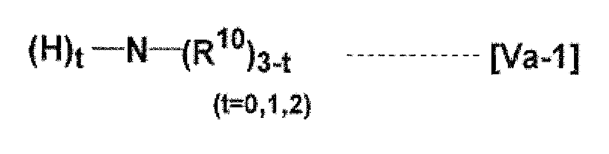

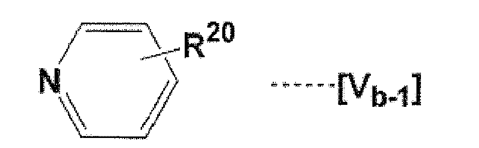

The amines [Va-1] or [Vb-1] used in forming the triphenylboron-amine complex (b1) represented by Formula [Va] or [Vb] include, to be specific,
primary amines such as propylamine, butylamine, hexylamine, octylamine, decylamine, dodecylamine, tridecylamine, tetradecylamine, hexadecylamine, octadecylamine, 3-(2-ethylhexyl)propylamine, 3-(2-ethylhexyloxy)propylamine, aniline, toluidine and the like;
secondary amines such as dibutylamie, dihexylamine, dioctylamine, didecylamine, didodecylamine, ditridecylamine, ditetradecylamine, dihexadecylamine, dioctadecylamine, diphenylamine and the like; and
tertiary amines such as tripropylamine, trihexylamine, trioctylamine, tridecylamine, tridodecylamine, tritridecylamine, tritetradecylamine, trihexadecylamine, trioctadecylamine, triphenylamine and the like.

Among them, the primary amines are preferred, and octadecylamine is particularly preferred.

In particular, when R¹⁰ of the amines [Va-1] used in forming the triphenylboron-amine complex represented by Formula [Va] is an alkoxy group represented by -R¹-O-R² (R¹ and R² are defined in the same manner as described above), the above amines are called alkoxy-containing amines, and among them, alkoxy-containing amine represented by the following Formula (I) is preferred:

H₂N-R¹-O-R² (I)

In Formula (I), R¹ and R² are defined in the same manner as described above. That is, R¹ represents a linear or branched alkylene group having 1 to 8 carbon atoms or a phenylene group, and R² represents a linear or branched alkyl group having 1 to 18 carbon atoms.

To be specific, the alkoxy-containing amine (I) includes, for example, 3-ethoxypropylamine, 3-butoxypropylamine, 3-(2-ethylhexyloxy)propylamine, 3-lauryloxypropylamine, 3-stearyloxypropylamine, 4-(2-ethylhexyloxy)butylamine, 4-lauryloxybutylamine, 8-ethoxyoctylamine, 8-(2-ethylhexyloxy)octylamine, 2-ethylhexyloxyphenylamine, lauryloxyphenylamine and the like.

Among the above alkoxy-containing amines (I), 3-(2-ethylhexyloxy)propylamine is preferred.

The amines represented by Formula [Vb-1] described above which are used in forming the triphenylboron-amine complex (b1) represented by Formula [Vb] can be shown by examples such as pyridines, in addition to pyridine, including nuclear substituents of pyridine such as:
2-picoline, 3-picoline and 4-picoline which are obtained by substituting one H (= R²⁰) of pyridine with methyl; and
2-chloropicoline, 3-chloropicoline and 4-chloropicoline which are obtained by substituting one H (= R²⁰) of pyridine with Cl. Pyridine is particularly preferred in terms of a stability of the triphenylboron-amine complex (b1).

Among the triphenylboron-amine complexes (b1) represented by Formula [Va] or [Vb], preferably used are triphenyl(octadecylamine)boron (that is, in Formula [Va], t is 2, and R¹⁰ is octadecyl group);
complexes of triphenylboron with alkoxy-containing amine, particularly triphenyl[3-(2-ethylhexyloxy)propylamine]boron (in Formula [Va], t is 2, and R¹⁰ is 3-(2-ethylhexyloxy)propyl group); and
triphenylboron-pyridine (pyridine-triphenylborane, abbreviated as PTPB, that is, in Formula [Vb], R²⁰ is H).

### - Amine compound (C):

The amine compound (C) in the present invention has a function as a decomposition inhibitor for the triphenylboron-amine complex (b1).

It is estimated that the amine compound (C) can inhibit decomposition of the triphenylboron-amine complex (b1) in the antifouling coating material composition because of the following reason and reaction mechanism.

The triphenylboron-amine complex (b1) in the coating material stays in an equilibrium state with triphenylboron and the amine compound which stay in the state that the above complex (b1) is disengaged (dissociated), and it is considered that a bond of triphenylboron with the amine compound is formed by further adding the amine compound (C) and that the equilibrium is deviated to a direction in which the complex (b1) is formed.

If an acid component is added to the coating material blended with the above triphenylboron-amine complex (b1), the decomposition reaction of the triphenylboron-amine complex (b1) tends to be accelerated, and if the temperature is elevated in producing or storing the coating material blended with the above triphenylboron-amine complex (b1) or moisture and foreign matters such as metals and the like are mixed therein, the decomposition reaction of the triphenylboron-amine complex (b1) tends to be accelerated as well.

The above decomposition reaction is considered to proceed because of the reasons that a bond between triphenylboron and the amine compound is broken to bare a vacant orbital of a boron atom in the triphenylboron-amine complex (b1) to thereby enhance the chemical reactivity and that the structure of triphenylboron becomes instable, so that a phenyl group is released.

In contrast with this, it can be estimated that in the present invention, if a bond between triphenylboron and the amine compound (coordinately bonded with this triphenylboron) is broken, the amine compound (C) which is added and supplemented prevents the skeleton of the triphenylboron-amine complex (b1) from becoming instable to contribute to inhibition of the decomposition of the triphenylboron-amine complex (b1).

The above amine compound (C) may be any of ammonia, heterocyclic amines, cross-linked cyclic amines, aliphatic amines, alicyclic amines, aromatic amines and amino alcohols. An alkoxy group-containing amine compound is included as well in the aliphatic amines described above.

The amine compound (C) may be any of primary amines, secondary amines and tertiary amines, and among them, the primary amines are preferred in terms of a decomposition inhibiting effect of the triphenylboron-amine complex (b1).

The heterocyclic amines described above include a six-membered heterocyclic compound having 1 to 3 nitrogen atoms, a five-membered heterocyclic compound having 1 to 3 nitrogen atoms and the like.

Among them, the six-membered heterocyclic compound having 1 to 3 nitrogen atoms is preferably pyridines, pyridazines, pyrimidines, pyrazines, piperidines, piperazines, morpholines, picolines, quinolines and quinaldines, and the above six-membered heterocyclic compounds may be substituted with halogen, a lower alkyl group (1 to 3 carbon atoms), a phenyl group, an acetyl group, an amino group, a carboxyl group, a hydroxyl group and an alcohol group or may not be substituted (non-substituted). Further, in the case of pyridine, it may be incorporated into a polymer as is the case with 4-vinylpyridine.

When the amine compound (C) is selected from the six-membered heterocyclic compounds described above, preferred are pyridines represented by 4-hydroxypyridine and 4-acetylypyridine and quinolines represented by quinoline and isoquinoline.

On the other hand, the five-membered heterocyclic compound having 1 to 3 nitrogen atoms is preferably pyrroles, pyrrolines, indoles, isoindoles, imidazoles, benzimidazoles, thiazoles and isothiazoles, and the above five-membered heterocyclic compounds may be substituted with halogen, a lower alkyl group (1 to 3 carbon atoms), a phenyl group, an acetyl group, an amino group, a carboxyl group, a hydroxyl group and an alcohol group or may not be substituted (non-substituted).

When the amine compound (C) is selected from the five-membered heterocyclic compounds described above, imidazoles represented by imidazole are preferred.

The cross-linked cyclic amines are preferably quinuclidines and triethylenediamines.

When the amine compound (C) is selected from the cross-linked cyclic amines described above, triethylenediamines represented by triethylenediamine are preferred.

In addition thereto, the aliphatic amines, the alicyclic amines and the aromatic amines include the same compounds as the amines described above for forming the triphenylboron-amine complex (b1).

To be specific, preferred are, for example, primary amines such as n-propylamine, n-butylamine, n-hexylamine, n-octylamine, n-decylamine, n-dodecylamine, n-tridecylamine, n-tetradecylamine, n-hexadecylamine, n-octadecylamine, aniline, toluidine and the like;
secondary amines such as di-n-butylamine, di-n-hexylamine, di-n-octylamine, di-n-decylamine, di-n-dodecylamine, di-n-tridecylamine, di-n-tetradecylamine, di-n-hexadecylamine, di-n-octadecylamine, diphenylamine and the like; and
tertiary amines such as tri-n-butylamine, tri-n-hexylamine, tri-n-octylamine, tri-n-decylamine, tri-n-dodecylamine, tri-n-tridecylamine, tri-n-tetradecylamine, tri-n-hexadecylamine, tri-n-octadecylamine, triphenylamine and the like.

When the amine compound (C) is selected from the alkoxy group-containing amines described above, the alkoxy group-containing amine is preferably a compound represented by the following Formula (I):

H₂N-R¹-O-R² (I)

in Formula (I), R¹ represents a linear or branched alkylene group having 1 to 8 carbon atoms or a phenylene group, and R² represents a linear or branched alkyl group having 1 to 8 carbon atoms.

To be specific, the above alkoxy group-containing amine is preferably, for example, 3-ethoxypropylamine, 3-butoxypropylamine, 3-(2-ethylhexyloxy)propylamine, 3-lauryloxypropylamine, 3-stearyloxypropylamine, 4-(2-ethylhexyloxy)butylamine, 4-lauryloxybutylamine, 8-ethoxyoctylamine, 8-(2-ethylhexyloxy)octylamine, 2-ethylhexyloxyphenylamine, lauryloxyphenylamine and the like.

When the amine compound (C) is the alkoxy group-containing amine (I) described above, 3-(2-ethylhexyloxy)propylamine is preferred.

The amino alcohol is preferably a compound represented by any of the following Formulas (II), (III) and (IV).

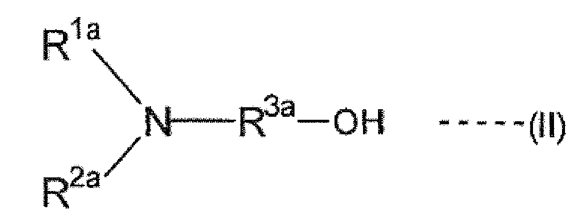

In Formula (II), R^{1a} and R^{2a} may be the same as or different from each other and are a hydrogen atom, an alkyl group having 1 to 24 carbon atoms, an alkenyl group having 1 to 24 carbon atoms, a cycloalkyl group having 3 to 12 carbon atoms, an alkylallyl group (an alkyl group part has 1 to 24 carbon atoms), an aralkyl group (an alkylene group part has 1 to 24 carbon atoms) or an allyl group, and R^{3a} is an alkyl group having 2 to 6 carbon atoms.

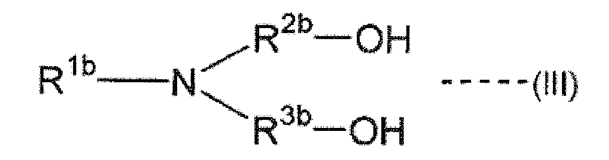

In Formula (III), R^{1b} is a hydrogen atom, an alkyl group having 1 to 24 carbon atoms, an alkenyl group having 1 to 24 carbon atoms, a cycloalkyl group having 3 to 12 carbon atoms, an alkylallyl group (an alkyl group part has 1 to 24 carbon atoms), an aralkyl group (an alkylene group part has 1 to 24 carbon atoms) or an allyl group, and R^{2b} and R^{3b} may be the same as or different from each other and are an alkylene group having 2 to 6 carbon atoms.

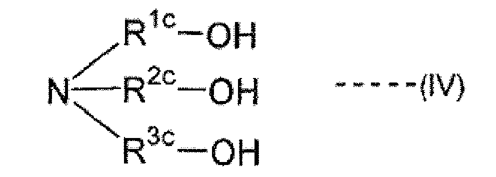

In Formula (IV), R^{1c}, R^{2c} and R^{3c} may be the same as or different from each other and are an alkylene group having 2 to 6 carbon atoms.

To be specific, the above amino alcohol is preferably, for example, monoethanolamine (β-aminoethanol, 2-aminoethanol and the like), diethanolamine, triethanolamine, n-propyl alcohol amine, di-n-propyl alcohol amine, tri-propyl alcohol amine, i-propyl alcohol amine, di-i-propyl alcohol amine, tri-i-propyl alcohol amine and the like. The above amino alcohols are used alone or in combination of two or more kinds thereof.

When the amine compound (C) is the amino alcohol represented by any of Formulas (II), (III) and (IV) described above, amino alcohol (II), particularly monoethanolamine is preferred.

In the present invention, various kinds of the amine compounds (C) described above may be used alone or in combination of two or more kinds thereof, for example, combination of (i) octadecylamine which is a kind of aliphatic primary amines and (ii) 4-hydroxypyridine, 4-acetylypyridine and the like which are a kind of the six-membered heterocyclic compound having 1 to 3 nitrogen atoms (may have the substituents described above).

An addition amount of the above amine compounds (C) is preferably a proportion of 0.1 to 3 mole per mole of the triphenylboron-amine complex (b1), and it is more preferably a proportion of 0.2 to 2 mole considering decomposition inhibition and a long term storage stability of the triphenylboron-amine complex (b1) and a long term antifouling property of the antifouling coating film obtained.

If an addition amount of the amine compound (C) is less than 0.2 moleper mole of the triphenylboron-amine complex (b1), the decomposition inhibition effect thereof tends to be unsatisfactory. On the other hand, if an addition amount of the amine compound (C) is more than 2 mole, a decomposition inhibition effect of the triphenylboron-amine complex (b1) is satisfactory, but a durability of the coating film when immersed in water over a long period of time is reduced, and as a result thereof, the long term antifouling property tends to be reduced as well.

The amine compound (C) used in an amount of 1.0 to 210 parts by weight, preferably 2.0 to 150 parts by weight per 100 parts by weight of the triphenylboron-amine complex (b1) described above is preferred in terms of the effects described above.

The triphenylboron-amine complex (b1) which is used in an amount of 5 to 150 parts by weight, preferably 7 to 100 parts by weight per 100 parts by weight of the coating film-forming resin (A) (solid content) described above is preferred in terms of a coating workability of the antifouling coating material composition and a flatness of the antifouling coating film obtained.

### - Other antifouling agent (b2):

The antifouling coating material composition of the present invention contains the triphenylboron-amine complex (b1) as an antifouling agent, and it may further contain, if necessary, the other antifouling agent (b2).

The antifouling agent other than the triphenylboron-amine complex (b1) includes, for example, copper pyrithione, zinc pyrithione, 4,5-dichloro-2-n-octyl-4-isothiazoline-3-one, N,N-dimethyldichlorophenylurea, 2,4,6-trichlorophenylmaleimide, 2-methylthio-4-tert-butylamino-6-cyclopropy-S-triazine, 2,4,5,6-tetrachloroisophthalonitrile, bisdimethyldithiocarbamoylzinc ethylenebisdithiocarbamate, chloromethyl-n-octyl disulfide, N,N'-dimethyl-N'-phenyl-(N-fluorodichloromethylthyio)sulfamide, N,N'-dimethyl-N'-tolyl-(N-fluorodichloromethylthyio)sulfamide, tetraalkylthiuram disulfide, zinc dimethyldithiocarbamate, zinc ethylenebisdithiocarbamate, 2,3-dichloro-N-(2',6'-diethylphenyl)maleimide, 2,3-dichloro-N-(2'-ethyl-6'-methylphenyl)maleimide, zinc sulfide and the like. The above antifouling agents may be used alone or in combination of two or more kinds thereof.

The above antifouling agents (b2) are preferred since they exert less effects on the physical properties of the coating film.

### - Color pigment (D):

The antifouling coating material composition of the present invention may be blended with various kinds of conventionally known organic and inorganic pigments as the color pigment (D).

The organic pigments include carbon black, naphthol red, phthalocyanine blue and the like. The inorganic pigments include, for example, red iron oxide, baryte powder, zinc oxide (ZnO), titan white, yellow iron oxide and the like. Various colorants such as dyes and the like may be included in the above pigments. The color pigment (D) of the present invention is particularly preferably red iron oxide, titan white and yellow iron oxide among the inorganic pigments in terms of a tinting power in terms of coloring properties, and the organic pigments described above are preferred as well since they can provide particularly a coating film having a brilliant color and cause less discoloration.

When blending the color pigment (D), it is used preferably in an amount of 0.05 to 125 parts by weight per 100 parts by weight of the coating film-forming resin (A) (solid content).

### - Extender pigment (E):

The antifouling coating material composition of the present invention may be blended with various kinds of conventionally known pigments as the extender pigment (E).

The extender pigment is such a pigment that has a small refractive index and that is transparent when mixed with oil and varnish and does not mask a coated surface, and such extender pigment includes, for example, talc, silica, mica, clay, zinc oxide, calcium carbonate which is also used as an anti-settling agent, kaolin, alumina white, white carbon which is also used as a delustering agent, aluminum hydroxide, magnesium carbonate, barium carbonate, barium sulfate and the like, and among them, zinc oxide, talc, silica, mica, clay, calcium carbonate, kaolin and barium sulfate are preferred. The above extender pigments can be used alone or in combination of two or more kinds thereof. When blending the extender pigment (E), it is used preferably in an amount of 2.5 to 250 parts by weight per 100 parts by weight of the coating film-forming resin (A) (solid content).

### - Inorganic dehydrating agent (F):

The antifouling coating material composition of the present invention may be further blended with anhydrite and gypsum hemihydrate (casting plaster) as the inorganic dehydrating agent (F). When blending the inorganic dehydrating agent (F), it is used preferably in an amount of 1.0 to 25 parts by weight per 100 parts by weight of the coating film-forming resin (A) (solid content).

### - Plasticizer (G):

The antifouling coating material composition of the present invention may be further blended with chlorinated paraffin and terpenephenol as the plasticizer (G). When blending the plasticizer (G), it is used preferably in an amount of 0.5 to 50 parts by weight per 100 parts by weight of the coating film-forming resin (A) (solid content).

### - Anti-sagging/anti-settling agent (thixotropic agent) (H):

The antifouling coating material composition of the present invention may be blended with organic clay base wax, organic wax and the like as the anti-sagging/anti-settling agent (thixotropic agent) (H).

The anti-sagging/anti-settling agent includes organic clay base waxes such as respective amine salts, stearate salts, lecithin salts and alkylsulfonic acid salts of A1, Ca and Zn; organic waxes such as polyethylene wax, amide wax, hydrogenated castor oil wax and polyamide wax; mixtures of the organic clay base waxes and the organic waxes; synthetic fine powder silica; polyethylene oxide base waxes, fatty acid amide waxes and the like, and among them, preferred are polyamide wax, synthetic fine powder silica, polyethylene oxide base waxes, fatty acid amide waxes and organic clay base waxes.

When blending the anti-sagging/anti-settling agent (thixotropic agent) (H), it is used preferably in an amount of 0.25 to 50 parts by weight per 100 parts by weight of the coating film-forming resin (A) (solid content).

### - Oxyalkylene group-containing linear organopolysiloxane (I):

The antifouling coating material composition of the present invention, particularly the antifouling coating material composition for fishing nets may be blended, if necessary, with oxyalkylene group-containing linear organopolysiloxane (also referred to as polyether silicone).

The oxyalkylene group-containing linear organopolysiloxane includes, for example, polyether-modified polydimethylsiloxane, polyether-modified polyalkyl(methyl)siloxane and the like. Among the above oxyalkylene group-containing linear organopolysiloxanes, the particularly preferred compound includes polyether-modified polydimethylsiloxane represented by the following Formula [1a] which was described as a component (b) in paragraphs [0038] to [0045] of JP A 1999-199414 filed by the present applicants.

The above polyether-modified polydimethylsiloxane has usually a hydrophile-lipophile balance (HLB) of 2 to 12, and it falls more preferably in a range of 2 to 7.

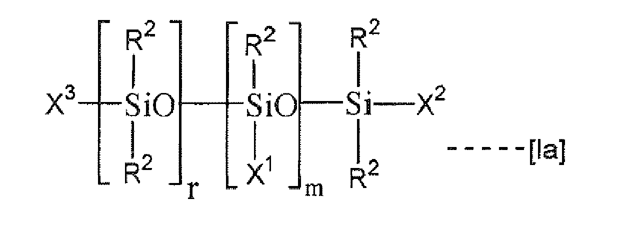

In Formula [1a], X¹, X² and X³ each represent independently a polyether group: -R-A-(R³O)ₙ-R⁴ (R represents an alkylene group having 1 to 5 carbon atoms; A represents a single bond or an oxygen atom; R³ represents an alkylene group having 1 to 5 carbon atoms; R⁴ represents an alkyl group having 1 to 5 carbon atoms or hydrogen; and n represents a repeating unit number) or an alkyl group having 1 to 5 carbon atoms; at least one of X¹, X² and X³ is the polyether group described above: -R-A-(R³O)ₙ-R⁴; R² represents an alkyl group having 1 to 3 carbon atoms; r and m each represent a repeating unit total number, and a bonding order of the repeating units [-Si(R²)₂O-] and [-Si(R²)(X¹)O-] is optional.

The polyether silicone represented by Formula [1a] described above is also referred to as polyether-modified silicone, and it can be classified into:
(i) side chain type polyether silicone, wherein X¹ out of X¹, X² and X³ is a polyether group such as -R-A-(C₂H₄O)ₙ-CH₃ (R, A and n are the same as described above) and the like, and X² and X³ are an alkyl group such as methyl and the like,
(ii) both end type polyether silicone, wherein X¹ out of X¹, X² and X³ is an alkyl group such as methyl and the like, and X² and X³ are a polyether group such as -R-A-(C₂H₄O)ₙ-CH₃ (R, A and n are the same as described above) and the like, and
   composite type polyether silicone in which the polyether group described above is bonded to (iii): a side chain and one end, (iv): a side chain and both ends or (v) only one end. Among them, the side chain type polyether silicone (i) or the both end type polyether silicone (ii) is preferred in terms of the antifouling property and the like.

In the polyether group described above: -R-A-(R³O)ₙ-R⁴, R represents an alkylene group having 1 to 5, preferably 2 to 5 carbon atoms, and this alkylene group may be either linear or branched. To be specific, the alkylene group includes methylene, ethylene, n-propylene, i-propylene, n-butylene and the like, and among them, the linear groups are preferred. Ethylene and n-propylene are more preferred, and ethylene is particularly preferred.

R³ represents an alkylene group having 1 to 5 carbon atoms which is the same as described above, and it includes preferably ethylene. The repeating unit number n is a number of 1 to 30. R⁴ represents an alkyl group having 1 to 5 carbon atoms or hydrogen, and it is preferably an alkyl group. The groups described above can be shown as the examples of the above alkyl group, and methyl is particularly preferred considering the antifouling property and a compatibility of polyether silicone with the resin.

The above polyether group includes, for example, -C₃H₆-O-(C₂H₄O)ₙ-C₂H₅, -C₂H₄-O-(C₃H₆O)ₙ-CH₃, -C₃H₆-O-(C₂H₄O)ₙ-CH₃, -C₂H₄-O-(C₃H₆O)ₙ-CH₃, -C₃H₆-(C₂H₄O)ₙ-CH₃, -C₂H₄-(C₃H₆O)ₙ-CH₃, -C₃H₆-(C₂H₄O)ₙ-H, -C₂H₄-(C₃H₆O)ₙ-H, -(C₃H₆O)ₙ-CH₃, -CH₂-O-(C₂H₄O)-CH₃, -CH₂-O-(C₂H₄O)ₙ-H, -(C₂H₄O)ₙ-CH₃, -(C₂H₄O)ₙ-H, -CH₂-O-(C₄H₆O)ₙ-CH₃, -CH₂-O-(C₄H₆O)ₙ-H, -(C₄H₆O)ₙ-H and the like. Among the above polyether groups, the groups having a methoxy group at an end are preferred considering the antifouling property and a compatibility of polyether silicone with the resin, and - C₃H₆-O-(C₂H₄O)ₙ-CH₃ and -C₂H₄-O-(C₃H₆O)ₙ-CH₃ are particularly preferred.

R² in Formula [1a] represents an alkyl group having 1 to 3 carbon atoms (methyl, ethyl, n-propyl, i-propyl and the like). Plural R² may be the same as or different from each other, and all of them are preferably methyl.

A bonding order of the repeating units [-Si(R²)₂O-] and [-Si(R²) (X¹)O-] is optional. That is, when X¹ on a side chain is the polyether group described above: -R-A-(R³O)-R⁴, this X¹ may be present in any positions of the side chain group in a polyether silicone molecule.

The repeating unit number r is a number of 1 to 7000, and m is a number of 1 to 50. The above polyether silicone has a molecular weight of usually 1,000 to 50,000, preferably 3,000 to 10,000.

The above oxyalkylene group-containing linear organopolysiloxane (I) can be used in an amount of, for example, 0.5 to 200 parts by weight per 100 parts by weight of the coating film-forming resin (A) (solid content).

### - Plastic resin (J):

The antifouling coating material composition of the present invention may be further blended, if necessary, with the plastic resin (J) such as polybutenes, paraffins, vaselines, dialkyl sulfide compounds and the like. When blending the plastic resin (J), it is used preferably in an amount of 0.5 to 50 parts by weight per 100 parts by weight of the coating film-forming resin (A) (solid content).

The polybutenes described above include, for example, "Polybutene LV-7", "Polybutene LV-10", "Polybutene LV-50" and "Polybutene LV-100" each manufactured by Nippon Petrochemicals Co., Ltd.

The paraffins described above include, for example, n-paraffin (manufactured by Nippon Petrochemicals Co., Ltd.), chlorinated paraffin (e.g., A-40, A-50, A-70, A-145 and A-150 manufactured by Tosoh Corp.) and the like.

The vaselines include, for example, white vaseline and yellow vaseline (manufactured by Andoh Parachemie Co., Ltd. and the like). The dialkyl sulfide compound described above includes a compound represented by the following Formula (VI).

R^{3d}-(S)ₙ-R^{3e} (VI)

In Formula (VI), plural R^{3d} and R^{3e} may be the same as or different from each other and each represent a linear or branched alkyl group having 1 to 20 carbon atoms, and n represents an integer of 1 to 20.

The linear or branched alkyl group having 1 to 20 carbon atoms represented by R^{3d} or R^{3e} includes methyl, ethyl, propyl, hexyl, octyl, nonyl, decyl, dodecyl, octadecyl and the like, and among them, an alkyl group having 4 to 19 carbon atoms is particularly preferred.

The term n in Formula (VI) is an integer of 1 to 20, and n is preferably 1 to 10, more preferably 4 to 10 in terms of maintaining the antifouling property.

The dialkyl sulfide compound (VI) includes, for example, di-tert-butyl decasulfide, dipentyl tetrasulfide, dipentyl pentasulfide, dipentyl decasulfide, dioctyl disulfide, dioctyl tetrasulfide, dioctyl pentasulfide, dinonyl tetrasulfide, dinonyl pentasulfide, di-tert-nonyl tetrasulfide, di-tert-nonyl pentasulfide, didecyl tetrasulfide, didodecyl tetrasulfide, dioctadecyl tetrasulfide, dinonadecyl tetrasulfide and the like. It shall not be restricted to the above compounds.

### - Solvent (M):

Various components described above are dissolved or dispersed in a solvent in the antifouling coating material composition (antifouling coating material) of the present invention.

The solvent used in the above case includes, for example, various solvents blended usually into antifouling coating materials, such as aliphatic solvents, aromatic solvents, ketone base solvents, ester base solvents, ether base solvents and the like. The aromatic solvents described above include, for example, xylene, toluene and the likeThe ketone base solvents include, for example, MIBK and the like. The ether base solvents include, for example, propylene glycol monomethyl ether, propylene glycol monomethyl ether acetate (PMAC) and the like.

When the triphenylboron-amine complex (b1) or the amine compounds (C) which is solid at ambient temperature is used in the antifouling agent set of the present invention, the solvent (M) which can dissolve the above components (b1) and (C) may be blended if necessary, and the solvent (M) used in this case includes the same solvents as described above.

### Production of antifouling coating material composition and antifouling agent set

The antifouling coating material composition according to the present invention is obtained by adding the amine compound (C) to conventional ship bottom coating materials, antifoulants for fishing nets, which contain components such as, for example, the coating film-forming resin (A) and the triphenylboron-amine complex (b1) but do not contain the amine compound (C), in an amount of 1 to 210 parts by weight, preferably 2 to 150 parts by weight per 100 parts by weight of the triphenylboron-amine complex (b1), in other words, in an amount of 0.1 to 3 mole, preferably 0.2 to 2.0 mole per mole of the triphenylboron-amine complex (b1).

The amine compound (C) is contained in the antifouling coating material composition according to the present invention thus obtained, and therefore the triphenylboron-amine complex (b1) can be inhibited from being decomposed.
In addition thereto, an antifouling coating film having an excellent static antifouling property is obtained by coating the antifouling coating material of the present invention containing the above triphenylboron-amine complex (b1) onto parts of ships, fishing nets, other fishing materials and the like which are brought into contact with seawater.

It is a matter of course that when conventional ship bottom coating materials, antifoulants for fishing nets and the like contain neither the triphenylboron-amine complex (b1) nor the amine compound (C), the components (b1) and (C) which are the essential components of the antifouling agent set according to the present invention may be added and mixed with the above ship bottom coating materials and the like and that the solvent (M) may be added and mixed as well if necessary.

The antifouling agent set of the present invention is obtained by blending the triphenylboron-amine complex (b1) and the amine compound (C) and further blending (miximg), if necessary, the solvent (M) which can dissolve them.

In preparing any of the antifouling coating material composition and the antifouling agent set according to the present invention, an order of adding the above components (b1) and (C) shall not specifically be restricted.

In preparing the antifouling coating material composition of the present invention, the components (b1), (C) and (M) which constitute the antifouling agent set may be blended (added) in the amounts described above.

### Antifouling coating film, substrate provided with coating film, antifouling substrate and antifouling method for substrate

The antifouling coating film according to the present invention is characterized by comprising any of the antifouling coating material compositions described above.

The substrate provided with a coating film according to the present invention is characterized by that the surface of the substrate is coated with a coating film obtained by curing any of the antifouling coating material compositions described above.

The antifouling substrate according to the present invention is characterized by that the surface of the substrate brought into contact with seawater or freshwater is coated with a coating film obtained by curing any of the antifouling coating material compositions described above.

The antifouling substrate or the substrate described above which is a coated matter having an antifouling coating film formed thereon includes underwater structures, ship outside plates, fishing net, fishing equipments and the like.

The method for forming a coating film on the surface of a substrate according to the present invention is
characterized by coating or impregnating the surface of the substrate with any of the antifouling coating material compositions described above and then curing the antifouling coating material to form a coating film.

The antifouling method for a substrate according to the present invention is characterized by coating or impregnating the surface of the substrate with any of the antifouling coating material compositions described above and then curing the above antifouling coating material to form an antifouling coating film.

### Method for inhibiting and controlling decomposition of triphenylboron-amine complex

The method for inhibiting and controlling decomposition of a triphenylboron-amine complex according to the present invention is characterized by adding the amine compound (C) to the triphenylboron-amine complex (b1).

The suited examples of the triphenylboron-amfine complex (b1) in the above inhibiting and controlling method are the same as in the cases of the antifouling coating material composition and the antifouling agent set each described above, and the suited examples given therefor are preferably used.

The suited examples of the amine compound (C) in the above decomposition inhibiting and controlling method are also the same as in the cases of the antifouling coating material composition and the antifouling agent set each described above, and the suited examples given therefor are preferably used.

An addition amount of the amine compound (C) in this case is the same as an addition amount thereof in the antifouling coating material composition described above. That is, the amine compound (C) is added in an amount of usually 1 to 210 parts by weight, preferably 2.0 to 150 parts by weight per 100 parts by weight of the triphenylboron-amine complex (b1) in terms of a weight ratio, and the amine compound (C) is added in an amount of usually 0.1 to 3 mole, preferably 0.2 to 2 mole per mole of the triphenylboron-amine complex (b1) in terms of a mole ratio. An effect which is well balanced between decomposition inhibition of the triphenylboron-amine complex (b1) at ambient temperature (e.g., 15 to 25°C) to high temperature (e.g., vicinity of 50°C), a long term storage stability of the antifouling coating material composition and a long term antifouling property and a durability of the coating film obtained therefrom is obtained by controlling an addition amount of the amine compound (C) in the above ranges.

The inhibiting and controlling method for decomposition of the triphenylboron-amine complex according to the present invention makes it possible to inhibit readily and efficiently the decomposition of the triphenylboron-amine complex (b1), and as a result thereof, production of benzene and generation of benzene odor which are brought about by decomposition of the triphenylboron-amine complex (b1) can notably be inhibited and reduced.

The triphenylboron-amine complex (b1) which is a target in the decomposition inhibiting and controlling method according to the present invention may be any of (i) the triphenylborone-amine complex (b1) contained in an antifouling coating material obtained by removing only the amine compound (C) from the antifouling coating material composition of the present invention, (ii) the triphenylborone-amine complex (b1) contained in a conventionally known antifouling coating material (contains the component (b1) but does not contain the amine compound (C)), (iii) the triphenylboron-amine complex (b1) itself which does not contain the other components and (iv) the triphenylborone-amine complex (b1) contained in a solution or a dispersion of the above complex containing the triphenylboron-amine complex (b1)and a solvent, a dispersion medium and the like, and it shall not specifically be restricted.

The antifouling coating material composition of the present invention is prepared by adding the amine compound (C) to the antifouling coating material (i) or (ii) described above, and the antifouling agent set of the present invention is prepared by adding the amine compound (C) to the antifouling coating material (iii) or (iv) described above.

The embodiment of the method for inhibiting and controlling the decomposition of the triphenylboron-amine complex shall not be restricted to an embodiment in which the amine compound (C) is added to the triphenylboron-amine complex (b1) and the blended matter thereof as described above. The decomposition of the triphenylboron-amine complex can be inhibited as well by adding the triphenylboron-amine complex (b1) to the amine compound (C) and blending and mixing the amine compound (C) and the triphenylboron-amine complex (b1) at the same time.

### EXAMPLES

The suited embodiments of the antifouling coating material composition according to the present invention, the antifouling agent set and the method for inhibiting and controlling the decomposition of the triphenylboron-amine complex shall more specifically be explained below with reference to examples, but the present invention shall by no means be restricted by the examples shown below.

In examples and production examples shown below, "parts" shows parts by weight.

### Preparation of compositions in Examples A group to D group and Comparative Examples 1 to 13

Prepared by conventional methods were antifouling coating material compositions of Example A group (Examples A1 to A17: Table 1), Example B group (Examples B1 to B17: Table 2) and Example C group (Examples C1 to C15 : Table 3) in which different kinds of the copolymers (A) and other components in addition to the triphenylboron-amine complex (b1) and the amine compound (C) are contained, and antifouling agent sets of Example D group (Examples D1 to D14: Table 4) comprising the triphenylboron-amine complex (b1), the amine compound (C) and the solvent.

Further, prepared as well by conventional methods were antifouling coating material compositions of Comparative Examples 1 to 12 (Table 5) which contain the triphenylboron-amine complex (b1) but do not contain the amine compound (C), and an antifouling agent set prepared in Comparative Example 13 (Table 6) comprising only the triphenylboron-amine complex (b1) and the solvent.

### - Method for preparing the antifouling coating material compositions:

The antifouling coating material composition of Example A1 was prepared by charging a vessel with a copolymer (A) which is the coating film-forming resin (A), pyridinetriphenylboron which is the antifoulant component (b1), pyridine which is the amine compound (C), chlorinated paraffin, zinc oxide, casting plaster, titan white, phthalocyanine blue, polyethylene oxide wax, a thixotropic agent (fatty acid amide wax, polyethylene oxide wax) and various solvents (xylene, propylene glycol monomethyl ether) in a lump in blend amount ratios shown in Table 1 and then mixing and dispersing the above components by means of a paint shaker.

Timing of adding the amine compound (C) in a step of producing the coating materials may be any timing including an embodiment in which it is added after producing a coating material containing no amine compound (C)An effect of inhibiting the decomposition of the antifoulant component (b1) did not change in what step the amine compound (C) was added.

Further, the antifouling coating material compositions of the other examples (Examples A group to D group) were prepared as well in the same manner as in the method of Example A1 described above, and in respect to timing of adding the amine compound (C), the same results as in the case of Example A1 described above were obtained.

### Performance evaluations of the respective compositions

The respective antifouling coating material compositions prepared in the manners described above were subjected to performance evaluations of three items according to test methods shown below.

[1] Residual rate of the triphenylboron-amine complex (b1) in the coating materials:
   The respective antifouling coating material compositions were stored under the condition of 50°C for one month, and then a residual amount of the antifoulant component (b1) was quantitatively analyzed by high performance liquid chromatograph (HPLC) to determine the residual rate.

The measuring conditions of HPLC described above are shown below.

Apparatus: high performance liquid chromatograph "Alliance 2695" and a UV detector "2487" (all manufactured by Waters Corporation)
Column: "Inertsil ODS-3" (manufactured by GL Sciences Inc.)
Eluate: acetonitrile (a) + water (b) + 0.5 mol/L of tetrabutylammonium phosphate (c) = (a) 65 + (b) 34 + (c) 1 (unit: volume ratio)
Flow rate: 1 mL/minute
Column temperature: 40°C
Measuring wavelength: 220 nm

### [2] Production amount of benzene:

The respective antifouling coating material compositions were stored at 23°C for six months and then diluted with a solvent dimethylsulfoxide and the like. The solution obtained was sampled and put in a 40 ml vial bottle (airtight vessel) so that an amount did not exceed 0.0150 g and tightly sealed, and a concentration of benzene in the respective antifouling coating material compositions was measured by head space GC/MS to calculate a production amount of benzene during storage period.

The details of analytical conditions in head space GC/MS are shown below.

- Head space (HT3, manufactured by Teledyne-Tekmar):
   Valve oven temperature: 160°C
   Transfer line temperature: 160°C
   Sample oven temperature: 50°C
   Pressure applied to sample: 9 PSIG
   Time for pressurizing sample: 2 minutes
   Pressure equilibrating time: 0.2 minute
   Loop filling pressure: 5 PSIG
   Loop filling time: 2 minutes
   Time: 1 minute
- GC (GC 6890N, manufactured by Agilent):
   Column: DB-5MS (Length: 30 m, inner diameter: 0.25 mm, film thickness: 0.25 µm, manufactured by J & W Scientific Co., Ltd.)
   Oven temperature: 40°C (1 minute)-10°C/minute-200°C
   Carrier gas: helium
   Injection method: splitter (GC 15010, manufactured by GL Sciences Inc.) injection
   Column flow rate: 1.5 mL/minute
   Split ratio: 2 : 1
- MS (JMS-K9, manufactured by JEOL Ltd.):
   Measuring mode: selective ion detection method
   Monitor ion: 52/77/78/79
   Ionizing current: 200 uA
   Ionization energy: 70 eV
   Detector voltage: -1000 Volt
   Ion source temperature: 200°C
   Interface temperature: 200°C

### [3] Static antifouling property of antifouling coating film:

- Preparation of test pieces: panel test:
   Test pieces used in Examples A to C and Comparative Examples 1 to 12 were prepared by the following method.
An epoxy base anticorrosive coating material (epoxy anticorrosive coating material, brand name: "Bannoh 500", manufactured by Chugoku Marine Paints Ltd.) was coated in advance on a sand blast-treated steel plate (height 300 mm x width 100 mm x thickness 3.2 mm) so that a dry film thickness thereof was 150 µm, and then an epoxy base binder coating material (brand name: "Bannoh 500N", manufactured by Chugoku Marine Paints Ltd.) was coated thereon so that a dry film thickness thereof was 100 µm.

Next, the antifouling coating material compositions having blend compositions shown in Examples A group to C group (Table 1 to Table 3) and Comparative Examples 1 to 12 (Table 5) which were stored at 50°C for one month were coated once so that a dry film thickness thereof was 150 µm and dried to prepare test plates provided with a coating film. A coating interval was set to 1 day/1 coat in any of the coating material (e.g., "Bannoh 500") and the coating material (e.g., "Bannoh 500N") overcoated on the surface thereof.

- Evaluation criteria of static antifouling property:
   0 point: adhesion area of aquatic organisms is about 100 %
   1 point: adhesion area of aquatic organisms is about 90 %
   2 point: adhesion area of aquatic organisms is about 80 %
   3 point: adhesion area of aquatic organisms is about 70 %
   4 point: adhesion area of aquatic organisms is about 60 %
   5 point: adhesion area of aquatic organisms is about 50 %
   6 point: adhesion area of aquatic organisms is about 40 %
   7 point: adhesion area of aquatic organisms is about 30 %
   8 point: adhesion area of aquatic organisms is about 20 %
   9 point: adhesion area of aquatic organisms is about 10 %
   10 point: no adhesion of aquatic organisms
   The results of the performance evaluations of the three items described above are shown all together in Table 1 to Table 3.

The antifouling coating material compositions prepared in Comparative Examples 1 to 12 were used to measure a residual rate and a static antifouling property of the triphenylboron-amine complex (b1) in the same manners as in the examples described above, and the results thereof are shown all together in Table 5.

### Review

As shown in the examples described above, the triphenylboron compound is stabilized in the antifouling coating material compositions of the present invention, and benzene hazardous to human bodies which was produced by the decomposition of the triphenylboron compound is inhibited as well from being produced. The above antifouling coating material compositions are not reduced in an antifouling property even after stored for long time and therefore exhibit an excellent antifouling effect against a wide variety of aquatic organisms over a long period of time.

### Products and the like used in the examples

The details (product names, the physical properties thereof etc.) of the blend components shown in Table 1 to Table 6 which were used for preparing the antifouling coating material composition and the antifouling agent sets in the examples described above are shown below.

(1) Copolymer A: refer to a production method described later.

(2) Copolymer B: refer to a production method described later.

(3) Copolymer C: refer to a production method described later.

(4) Chlorinated paraffin: trade name "Toyoparacs 150" (average carbon atom number: 14.5, chlorine content (amount): 50 %, viscosity: 12 poise/25°C, specific gravity: 1.25/25°C, manufactured by Tosoh Corporation).

(5) Zinc oxide: trade name "Zinc Oxide No. 3" (manufactured by Hakusui Tech Co., Ltd.).

(6) Talc: trade name "TTK Talc" (manufactured by Takehara Chemical Co., Ltd.).

(7) Casting plaster: trade name "FT-2" (manufactured by Noritake Gypsum Co., Ltd.).

(8) Titanium white: trade name "Titanium Oxide R-5N" (manufactured by Sakai Chemical Industry Co., Ltd.).

(9) Phthalocyanine blue: trade name "Cyanine blue S-2010" (manufactured by Dainichiseika Color & Chemicals Mfg.Co., Ltd.)

(10) Pyridine-triphenylborane: trade name "PK Boron'· (manufactured by Hokko Chemical Ind. Co., Ltd.)

(11) 4,5-Dichloro-2-n-octyl-4-isothiazoline-3-one: trade name "SEA-NINE 211" (solid content: 30 % by weight, manufactured by Rohm & Haas Co., Ltd.).

(12) 2-Pyridinethiol-1-oxide zinc salt: trade name "AF-Z" (manufactured by Yoshitomi Fine Chemical Co., Ltd.).

(13) N,N'-dimethyl-N'-tolyl-(N-fluorodichloromethylthio)-sulfamide: trade name "Preventol A-5S" (manufactured by Ranxess K.K.).

(14) Pyridine (manufactured by Kanto Chemical Co., Inc.) reagent, pure grade.

(15) Isoquinoline (manufactured by Kanto Chemical Co., Inc.) reagent, pure grade.

(16) Imidazole (manufactured by Kanto Chemical Co., Inc.) reagent, extra pure grade.

(17) 4-Hydroxypyridine (manufactured by Kanto Chemical Co., Inc.) reagent, extra pure grade.

(18) 4-Acetylpyridine (manufactured by Kanto Chemical Co., Inc.) reagent, extra pure grade.

(19) Polyethylene oxide wax: trade name "DISPARLON 4200-20" (20 % xylene paste, manufactured by Kusumoto Chemicals, Ltd.)

(20) Fatty acid amide wax: trade name "DISPARLON A630-20X" (20 % xylene paste, manufactured by Kusumoto Chemicals, Ltd.)

(21) Solvent: propylene glycol monomethyl ether: trade name "Kuraray PGM" (manufactured by Kuraray Co., Ltd.)

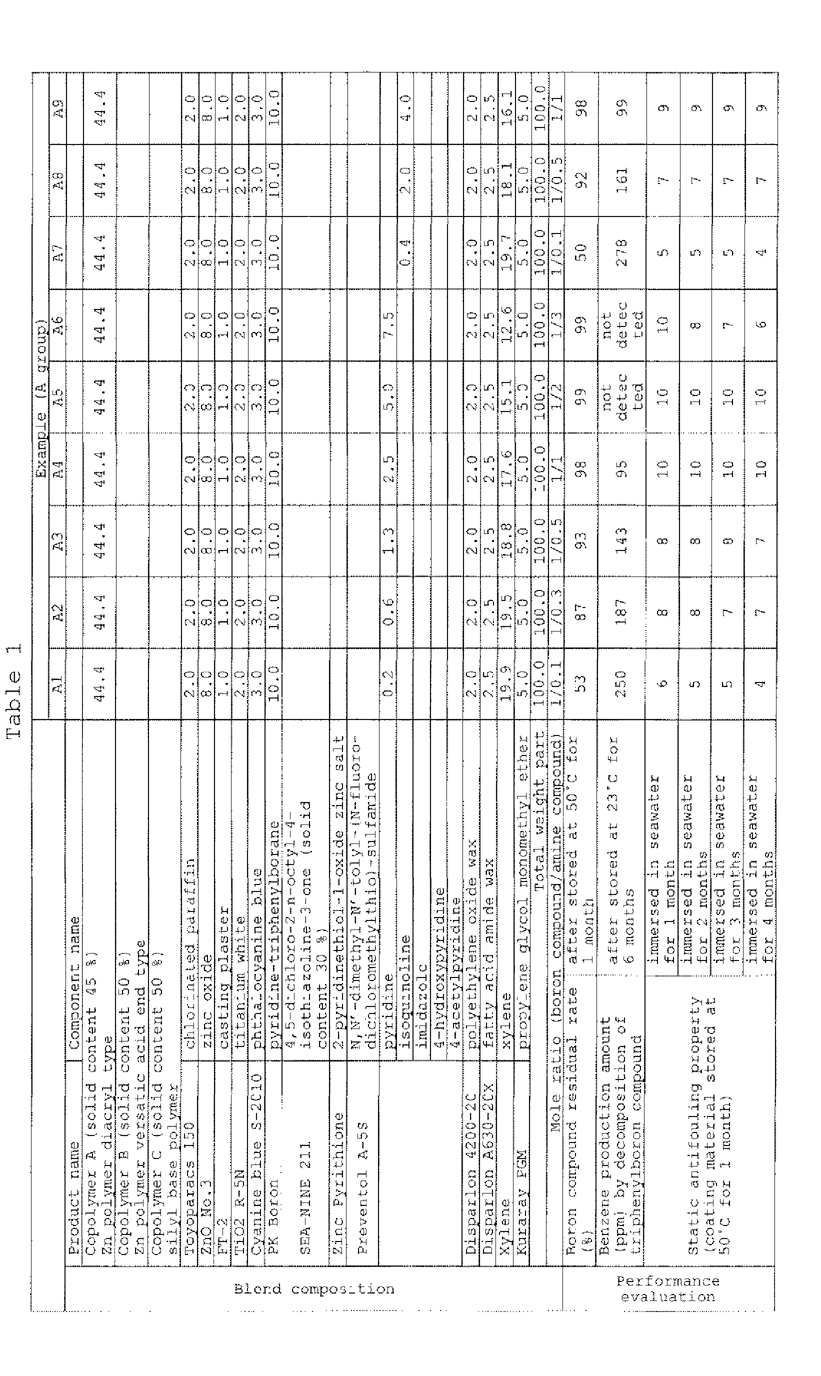

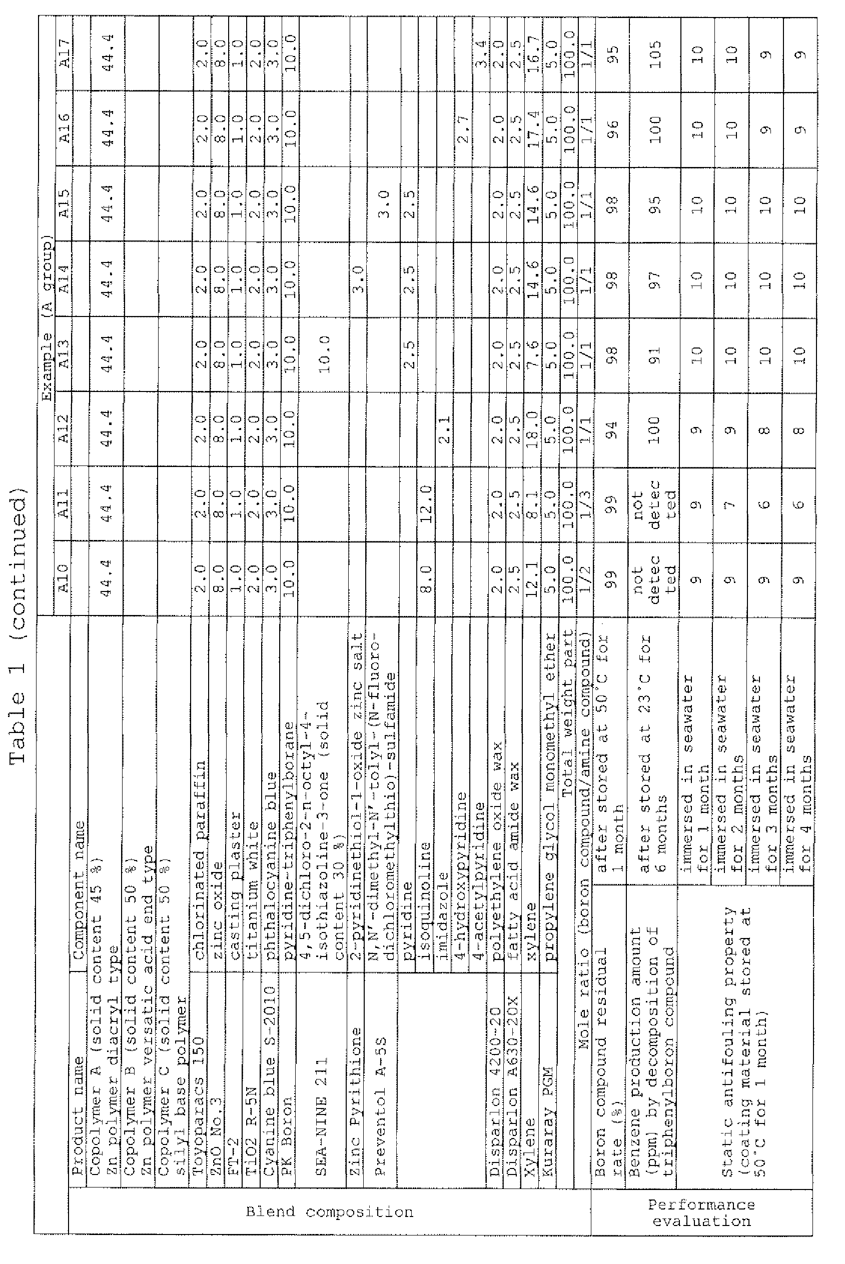

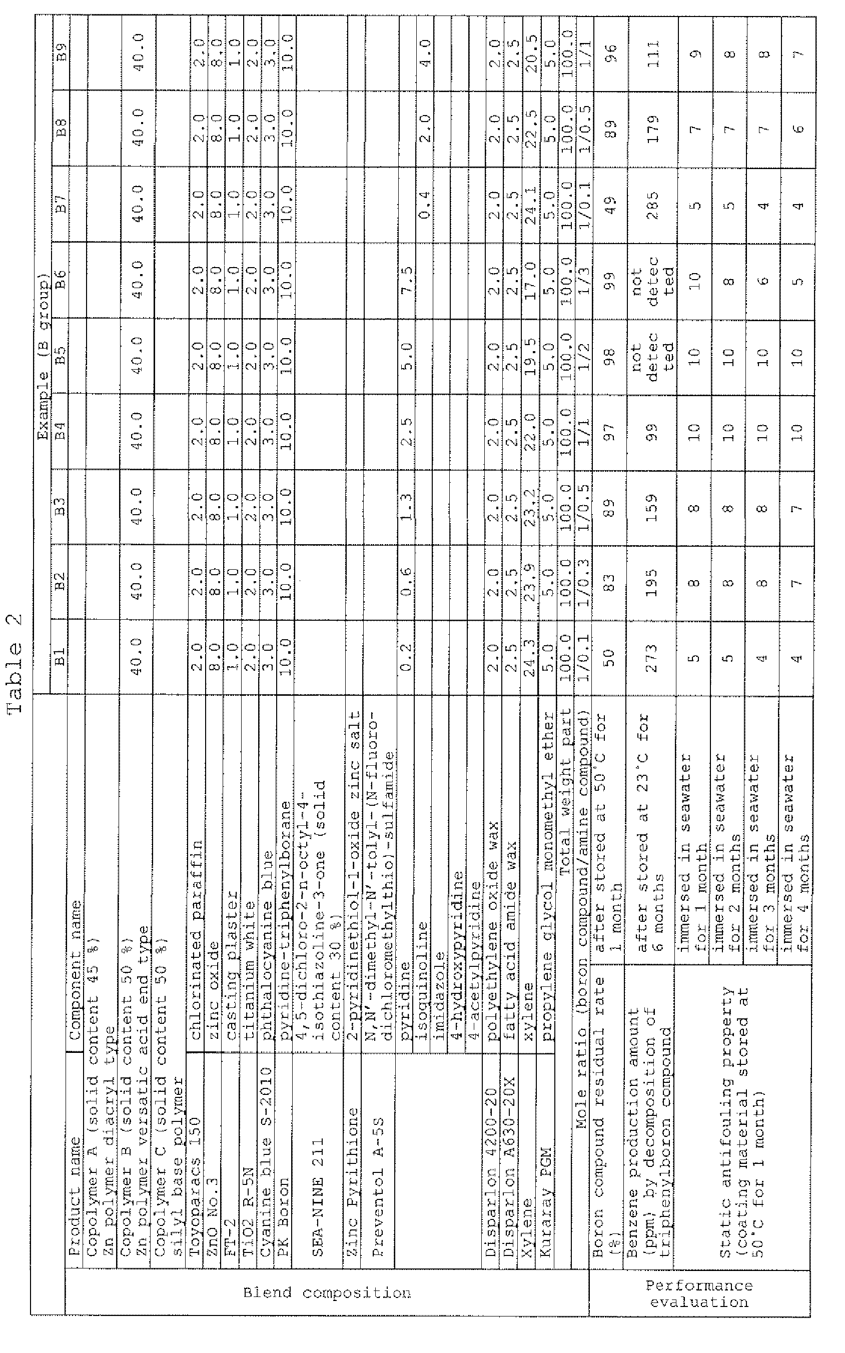

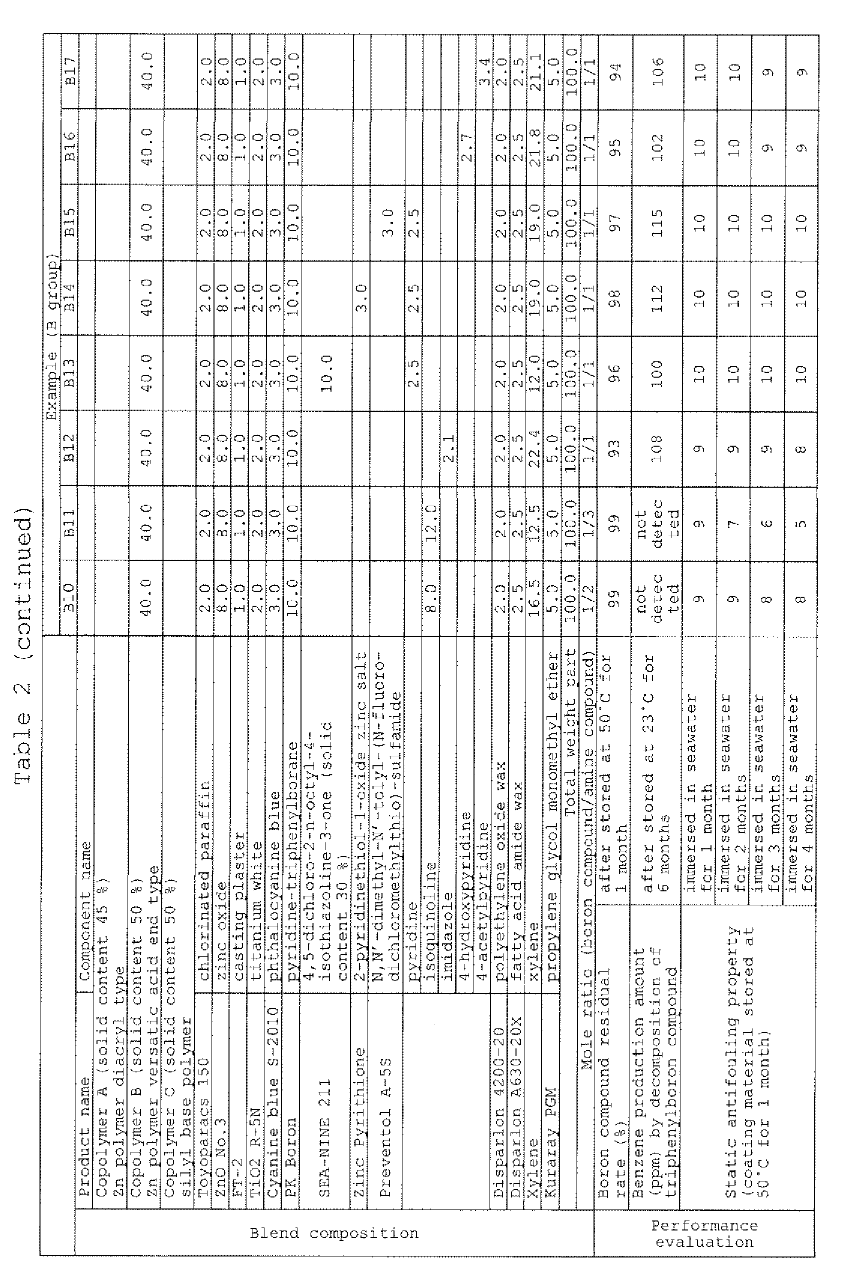

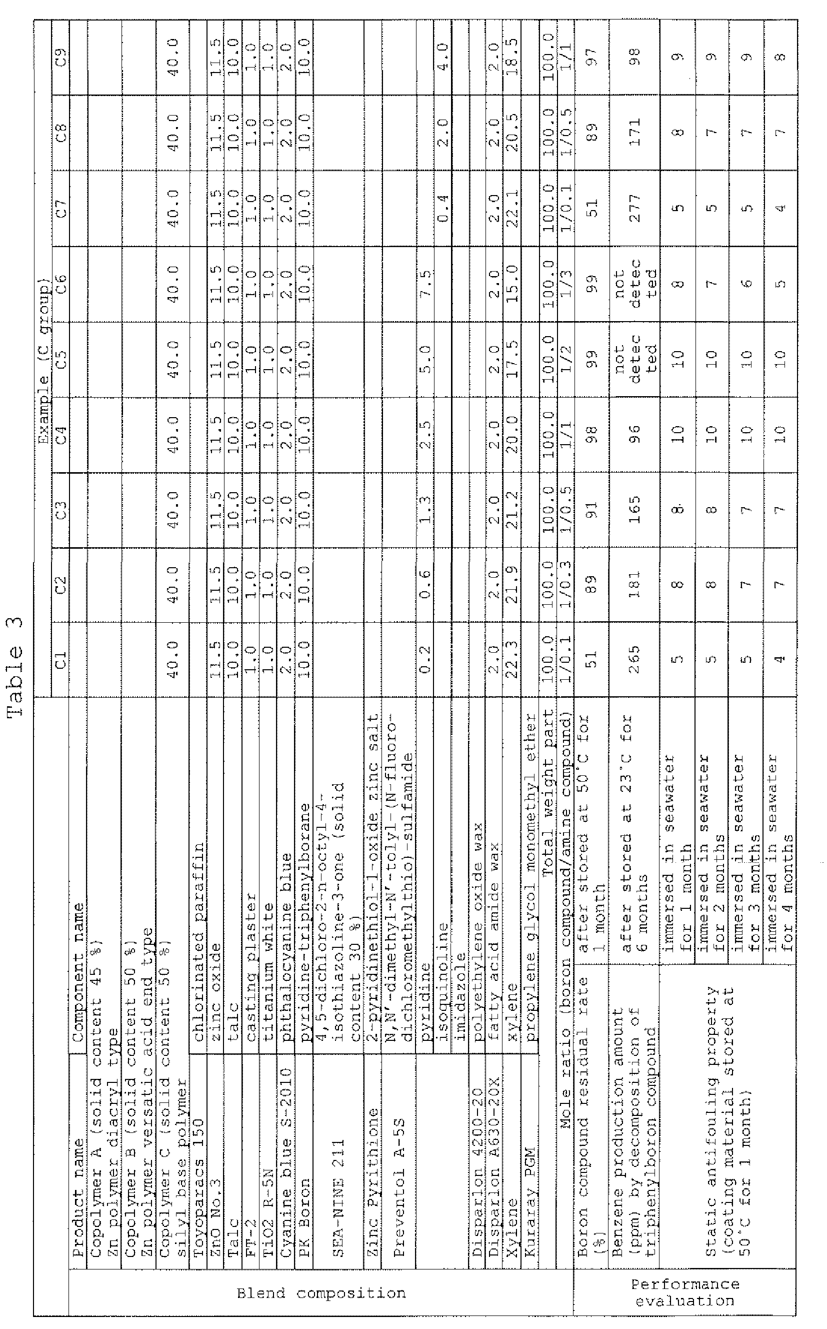

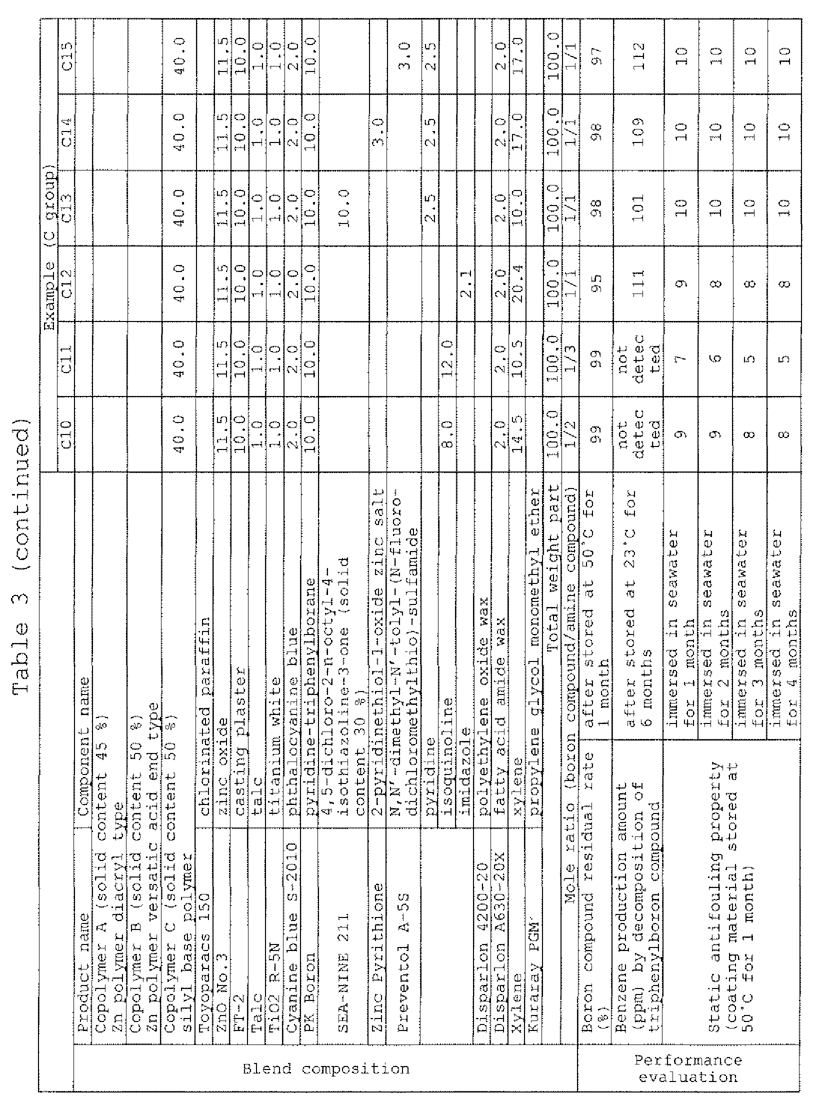

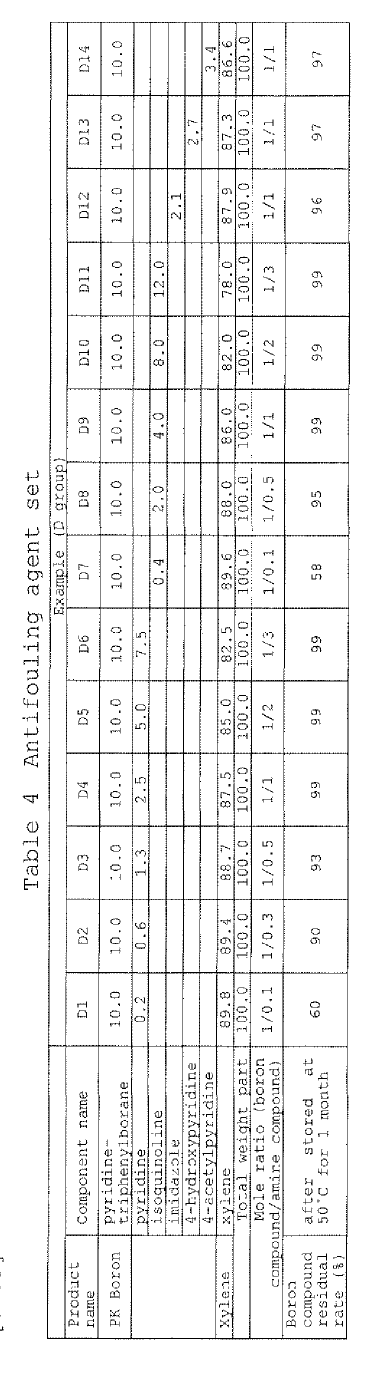

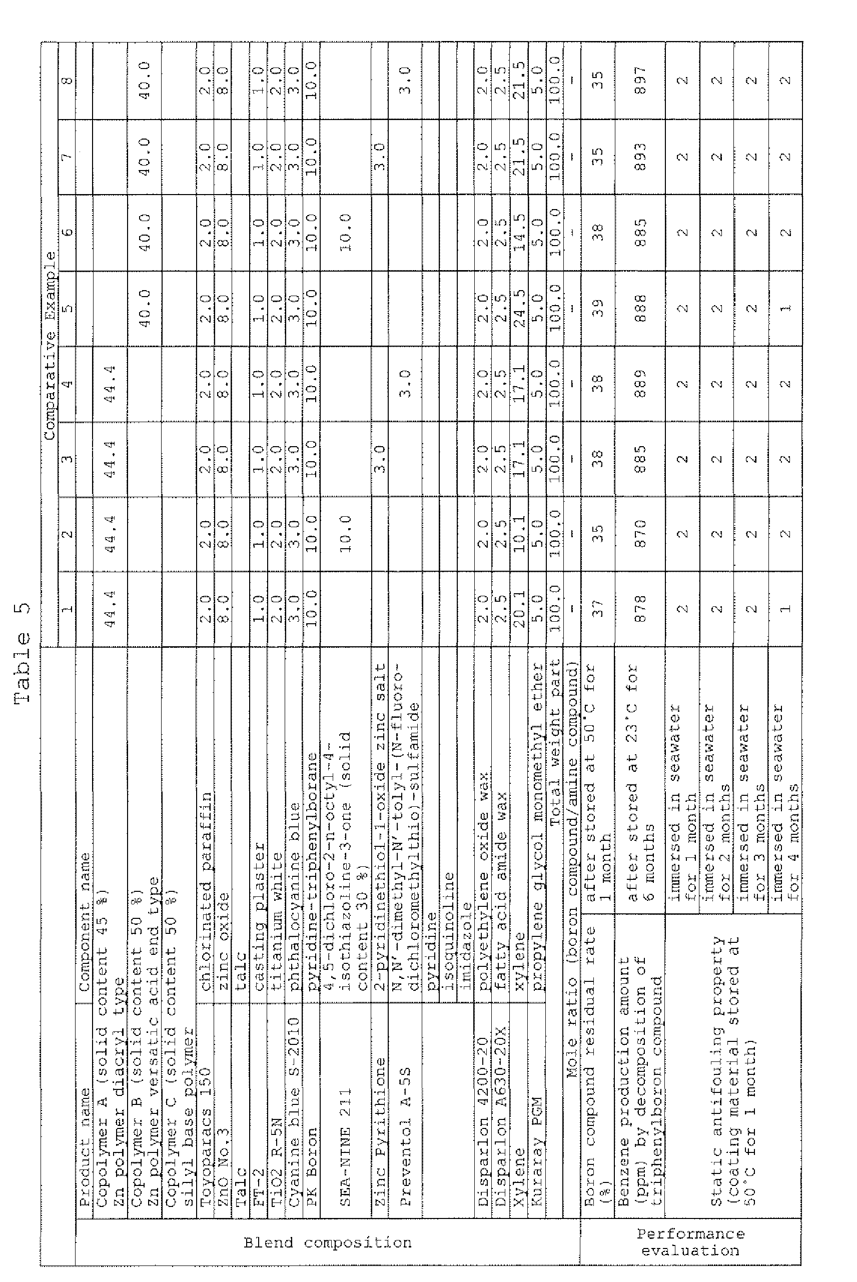

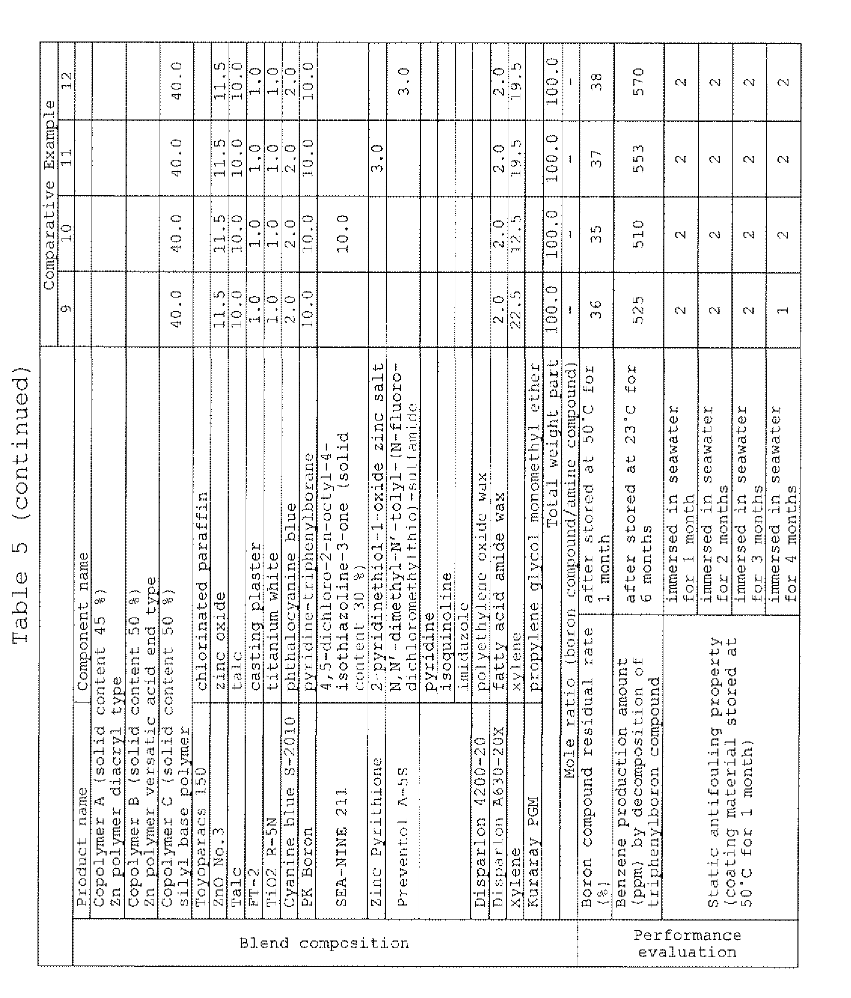

**Table 6 Antifouling agent set**

| Product name | Component name | Comparative Example 13 |
|---|---|---|
| PK Boron | pyridine-triphenylborane | 10.0 |
| Xylene | Xylene | 90.0 |
| Total weight part | | 100.0 |
| Mole ratio (boron compound/amine compound) | | - |
| Boron compound residual rate (%) | After stored at 50°C for 1 month | 31 |

### [A] Production method for copolymer A

### - Production of metal-containing monomer a

A four neck flask equipped with a condenser, a thermometer, a dropping funnel and a stirrer was charged with 85.4 parts of propylene glycol methyl ether (PGM) and 40.7 parts of zinc oxide (ZnO), and the flask was heated to 75°C while stirring. Subsequently, raw materials shown in Table 7, that is, a mixture comprising 43.1 parts of methacrylic acid (MAA), 36.1 parts of acrylic acid (AA) and 5 parts of water was dropwise added at a constant speed in 3 hours.

After finishing dropwise adding, the reaction solution changed from an opalescent state to a transparent state. After further stirring for 2 hours, 6.7 parts of n-butyl alcohol (n-BuOH) and 29.2 parts of xylene were added thereto to obtain a transparent mixture solution (a) containing a metal-containing monomer.

A solid content (showing a metal-containing polymer obtained by subjecting a metal-containing monomer mixture a in the solution to polymerization reaction; hereinafter the same shall apply) contained in the mixture solution obtained above was 44.9 % by weight.

The blend compositions and the like are shown all together in Table 7.

**Table 7 Production of metal-containing monomer mixture**

| | Charge amount (mole ratio) | | | | Content (%) of volatile components in metal-containing monomer mixture | | | | Solid content (weight %) |
|---|---|---|---|---|---|---|---|---|---|
| | MAA | AA | ZnO | Water | PGM | n-BuOH | Xylene | Water | |
| Metal-containing reaction mixture solution (a) | 0.5 | 0.5 | 0.5 | 0.27 | 34.8 | 2.7 | 11.9 | 5.7 | 44.9 |

| | | | | | | | | | |
|---|---|---|---|---|---|---|---|---|---|
| <Remark> MMA: methacrylic acid, AA: acrylic acid, N-BuOH: n-butyl alcohol, PGM: propylene glycol methyl ether | | | | | | | | | |

### -Production of copolymer A

A four neck flask equipped with a condenser, a thermometer, a dropping funnel and a stirrer was charged with 15 parts of propylene glycol methyl ether, 57 parts of xylene and 4 parts of ethyl acrylate, and the flask was heated to 100°C while stirring.

Subsequently, raw materials shown in Table 8, that is, a transparent mixture comprising 13 parts of methyl methacrylate (MMA), 65 parts of ethyl methacrylate (EA), 37.8 parts of the mixture solution (a) obtained in the "Production of metal-containing monomer a" step described above, 10 parts of xylene, 1 part of a chain transfer agent ("Nofmer MSD", manufactured by NOF CORPORATION), 2.5 parts of AIBN (azobisisobutyronitrile, manufactured by Nippon Hydrazine Industry Co., Ltd.) and 7 parts of AMBN (azobismethylbutyronitrile, manufactured by Nippon Hydrazine Industry Co., Ltd.) was dropwise added from the dropping funnel at a constant speed in 6 hours.

After finishing dropwise adding, 0.5 part of t-bytylperoxy octoate (TBPO) and 7 parts of xylene were dropwise added in 30 minutes, and after further stirred for one and a half hour, 4.4 parts of xylene was added to obtain a resin composition, which had a heat residue (measuring condition: measured from the heat residue after heated for 3 hoursat 105°C; hereinafter the same shall apply) of 46.2 % in the resin composition, a Gardner viscosity (measured at a resin concentration of 35 % by weight and 25°C) of "+Y", the resin contained in which has a number average molecular weight Mn of 2200 and a weight average molecular weight Mw of 5600 each measured by DPC and which was free from insoluble matters in the composition and pale yellow transparent and contained a copolymer A.

The kinds and the blend amounts (parts by weight) of the copolymerization monomers, the initiators and the chain transfer agent used and the characteristic values of the copolymer A obtained are shown all together in Table 8.

**Table 8 Production of copolymer A**

| Kind of polymer | | Copolymer A |
|---|---|---|
| Metal-containing reaction mixture solution (a) | | 37.8 |
| Copolymerization monomer | MMA | 13 |
| | EA | 65 |
| Initiator | AIBN | 25 |
| | AMBN | 7 |
| | TBPO | 0.5 |
| Chain transfer agent | Nofmer MSD | 1 |
| Characteristic value | Gardner viscosity | +Y |
| | solid content (%) | 46.2 |
| | molecular weight (Mn) | 2200 |
| | molecular weight (Mw) | 5600 |

| | | |
|---|---|---|
| Remark: the blend amount shows "parts by weight" | | |

### [B] Production method of copolymer B:

A four neck flask equipped with a condenser, a thermometer, a dropping funnel and a stirrer was charged with 30 parts by weight of PGM (propylene glycol monomethyl ether) and 40 parts by weight of xylene, and the flask was heated to 100°C while stirring.

Subsequently, raw materials shown in Table 9, that is, a mixture comprising the respective monomers comprising 35 parts of zinc versatate methacrylate, 10 parts of 2-methoxyethyl acrylate, 30 parts of 3-methoxybutyl acrylate and 25 parts of ethyl acrylate and 6 parts of t-butylperoxy octoate as a polymerization initiator was dropwise added from the dropping funnel at a constant speed in 3 hours.

After finishing dropwise adding, 1 part by weight of t-bytylperoxy octoate as an additional catalyst and 10 parts by weight of xylene were dropwise added in 2 hours, and after further stirred for 2 hours, 20 parts by weight of xylene was added to obtain a copolymer B (side chain end metal salt bond-containing copolymer) having characteristic values shown in Table 9.

**Table 9 Production of copolymer B**

| Kind of polymer | | Copolymer B |
|---|---|---|
| Metal-containing monomer | zinc versatate ethacrylate | 35 |
| Polymerizable monomer | 2-methoxyethyl acrylate | 10 |
| | 3-methoxybutyl acrylate | 30 |
| Unsaturated monomer | ethyl acrylate | 25 |
| Polymerization initiator | t-bytylperoxy octoate | 6 |
| Characteristic value | Gardner viscosity | +Z |
| | solid content (%) | 50.5 |

| | | |
|---|---|---|
| Remark: the blend amount shows "parts by weight" | | |

### [C] Production method of copolymer C

A reaction vessel equipped with a stirrer, a condenser, a thermometer, a dropping equipment and a heating and cooling jacket was charged with 100 parts of xylene, and the solution was heated and stirred on a temperature condition of 83°C under nitrogen flow.

A mixture comprising 60 parts of triisopropylsilyl acrylate, 39.5 parts of methyl methacrylate, 0.5 part of ethyl acrylate and 1.0 part of 2,2'-azobisisobutyronitrile as a polymerization initiator was dropwise added from the dropping equipment in 4 hours while maintaining the above temperature.

Then, the solution was continued to be stirred at the above temperature to obtain a transparent and colorless resin composition containing copolymer C. The resin composition thus obtained was heated at 105°C for 3 hours, and then the heat residue thereof was measured to find that it was 49.7 % by weight.

A glass transition temperature (Tg) of the copolymer C (heat residue) in the resin coposition was 45°C, and it had a number average molecular weight (Mn) of 6,800 and a weight average molecular weight (Mw) of 24,500 which were measured by GPC.

The kinds and the blend amounts (parts by weight) of the copolymerization monomers used and the like and the characteristic values of the copolymer C obtained are shown all together in Table 10.

**Table 10 Production of copolymer C**

| | | | |
|---|---|---|---|
| | triisopropylsilyl methacrylate | | 60 |
| Added components | methyl methacrylate | | 39.5 |
| (unit: parts by weight) | ethyl acrylate | | 0.5 |
| | 2,2'-azobisisobutyronitrile | | 1 |
| Polymerization temperature (°C) | | | 83 |
| Physical properties of the product | heat residue (% by weight) | | 49.7 |
| | viscosity/25°C (CPS) | | 160 |
| | GPC measurement value | Mn | 6,800 |
| | | Mw | 24,500 |
| | | Mw/Mn | 3.6 |
| | Tg (°C) | | 45 |

## Claims

1. An antifouling coating material composition comprising a coating film-forming resin (A) and a triphenylboron-amine complex (b1) as an antifouling agent (B), wherein the antifling coating composition further comprises (C) an amine compound (excluding the triphenylboron-amine complex (b1)) as a decomposition inhibitor for the triphenylboron-amine complex (b1).

2. The antifouling coating material composition as described in claim 1 comprising, in addition to the components (A), (B) and (C) described above, at least one component selected from the group consisting of an organic antifouling agent (b2) other than the triphenylboron-amine complex (b1), a color pigment (D), an extender pigment (E), an inorganic dehydrating agent (F), a plasticizer (G), an anti-sagging/anti-settling agent (thixotropic agent) (H), an oxyalkylene group-containing linear organopolysiloxane (I) and at least one plastic resin selected from polybutenes, paraffins, vaselines and dialkyl sulfide compounds (J).

3. The antifouling coating material composition as described in any of claims 1 to 2, wherein the amine compound (C) is contained in an amount of 1.0 to 210 parts by weight per 100 parts by weight of the triphenylboron-amine complex (b1).

4. The antifouling coating material composition as described in any of claims 1 to 3, wherein the triphenylboron-amine complex (b1) is contained in an amount of 5 to 150 parts by weight per 100 parts by weight of the coating film-forming resin (A) (solid content).

5. The antifouling coating material composition as described in any of claims 1 to 4, wherein the amine compound (C) is at least one selected from the group consisting of ammonia, heterocyclic amines, cross-linked cyclic amines, aliphatic amines which may contain an alkoxy group, alicyclic amines, aromatic amines and amino alcohols.

6. The antifouling coating material composition as described in any of claims 1 to 5, wherein the amine compound (C) is at least one selected from the group consisting of primary amines, secondary amines and tertiary amines.

7. The antifouling coating material composition as described in claim 5, wherein a six-membered heterocyclic compound having 1 to 3 nitrogen atoms is used as the amine compound (C).

8. The antifouling coating material composition as described in claim 7, wherein the six-membered heterocyclic compound is at least one selected from the group consisting of pyridines (the pyridines may be incorporated into a polymer), pyridazines, pyrimidines, pyrazines, piperidines, piperazines, morpholines, picolines, quinolines and quinaldines; and
the above six-membered heterocyclic compounds may be substituted with halogen, a lower alkyl group (1 to 3 carbon atoms), a phenyl group, an acetyl group, an amino group, a carboxyl group, a hydroxyl group or an alcohol group or may not be substituted (non-substituted).

9. The antifouling coating material composition as described in claim 5, wherein a five-membered heterocyclic compound having 1 to 3 nitrogen atoms is used as the amine compound (C).

10. The antifouling coating material composition as described in claim 9, wherein the five-membered heterocyclic compound is at least one selected from the group consisting of pyrroles, pyrrolines, indoles, isoindoles, imidazoles, benzimidazoles, thiazoles and isothiazoles; and
the above compounds may be substituted with halogen, a lower alkyl group (1 to 3 carbon atoms), a phenyl group, an acetyl group, an amino group, a carboxyl group, a hydroxyl group or an alcohol group or may not be substituted (non-substituted).

11. The antifouling coating material composition as described in claim 5, wherein at least one cross-linked cyclic amine of quinuclidines and triethylenediamines is used as the amine compound (C).

12. The antifouling coating material composition as described in claim 6, wherein the amine compound (C) is at least one selected from:
at least one primary amine selected from n-propylamine, n-butylamine, n-hexylamine, n-octylamine, n-decylamine, n-dodecylamine, n-tridecylamine, n-tetradecylamine, n-hexadecylamine, n-octadecylamine, aniline and toluidine;
at least one secondary amine selected from di-n-butylamine, di-n-hexylamine, di-n-octylamine, di-n-decylamine, di-n-dodeoylamine, di-n-tridecylamine, di-n-tetradecylamine, di-n-hexadecylamine, di-n-octadecylamine and diphenylamine; and
at least one tertiary amine selected from tri-n-propylamine, tri-n-hexylaznine, tri-n-octylamine, tri-n-decylamine, tri-n-dodecylamine, tri-n-tridecylamine, tri-n-tetradecylamine, tri-n-hexadecylamine, tri-n-octadecylamine and triphenylamine.

13. The antifouling coating material composition as described in claim 5, wherein the amine compound (C) is an alkoxy group-containing amine represented by the following Formula (I):
H₂N-R¹-O-R² (I)
(in Formula (I), R¹ represents a linear or branched alkylene group having 1 to 8 carbon atoms or a phenylene group, and R² represents a linear or branched alkyl group having 1 to 18 carbon atoms).

14. The antifouling coating material composition as described in claim 13, wherein the alkoxy group-containing amine represented by Formula (I) described above is at least one selected from the group consisting of 3-ethoxypropylamine, 3-butoxypropylamine, 3-(2-ethylhexyloxy)propylamine, 3-lauryloxypropylamine, 3-stearyloxypropylamine, 4-(2-ethylhexyloxy)butylamine, 4-lauryloxybutylamine, 8-ethoxyoctylamine, 8-(2-ethylhexyloxy)octylamine, 2-ethylhexyloxyphenylamine and lauryloxyphenylamine.

15. The antifouling coating material composition as described in claim 5, wherein the amine compound (C) is amino alcohol represented by any of the following Formulas (II), (III) and (IV): 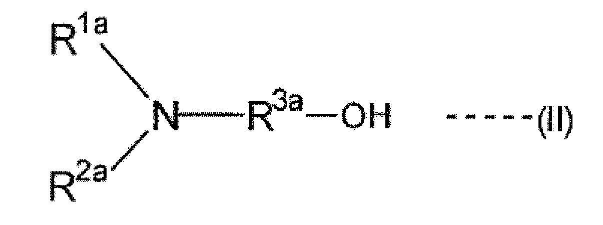 (in Formula (II), R^{1a} and R^{2a} may be the same as or different from each other and are a hydrogen atom, an alkyl group or alkenyl group having 1 to 24 carbon atoms, a cycloalkyl group having 3 to 12 carbon atoms, an alkylallyl group (an alkyl group part has 1 to 24 carbon atoms), an aralkyl group (an alkylene group part has 1 to 24 carbon atoms) or an allyl group, and R^{3a} is an alkylene group having 2 to 6 carbon atoms); 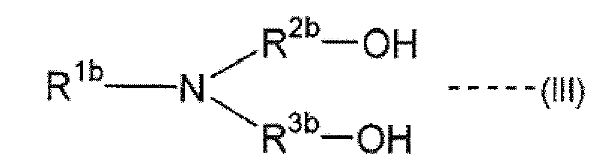 (in Formula (III),R^{1b} is a hydrogen atom, an alkyl group or alkenyl group having 1 to 24 carbon atoms, a cycloalkyl group having 3 to 12 carbon atoms, an alkylallyl group (an alkyl group part has 1 to 24 carbon atoms), an aralkyl group (an alkylene group part has 1 to 24 carbon atoms) or an allyl group, and R^{2b} and R^{3b} may be the same as or different from each other and are an alkylene group having 2 to 6 carbon atoms); and 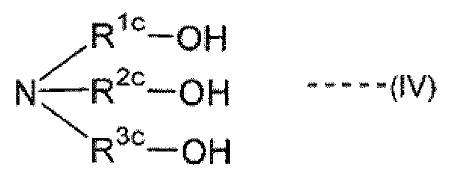 (in Formula (IV), R^{1c}, R^{2c} and R^{3c} may be the same as or different from each other and are an alkylene group having 2 to 6 carbon atoms).

16. The antifouling coating material composition as described in claim 15, wherein the amino alcohol is at least one selected from monoethanolamine, diethanolamine, triethanolamine, n-propyl alcohol amine, di-n-propyl alcohol amine, tri-propyl alcohol amine, i-propyl alcohol amine, di-i-propyl alcohol amine and tri-i-propyl alcohol amine.

17. The antifouling coating material composition as described in any of claims 1 to 4, wherein the triphenylboron-amine complex (b1) is a complex of triphenylboron with pyridine (pyridine-triphenylboron).

18. The antifouling coating material composition as described in any of claims 1 to 4, wherein the triphenylboron-amine complex (b1) is a complex of triphenylboron with alkylamine.

19. The antifouling coating material composition as described in claim 18, wherein the alkylamine is at least one selected from the group consisting of n-propylamine, n-butylamine, n-hexylamine, n-octylamine, n-decylamine, n-dodecylamine, n-tridecylamine, n-tetradecylamine, n-hexadecylamine, n-octadecylamine, aniline and toluidine.

20. The antifouling coating material composition as described in any of claims 1 to 4, wherein the triphenylboron-amine complex (b1) is a complex of triphenylboron with alkoxy group-containing amine.

21. The antifouling coating material composition as described in claim 20, wherein the alkoxy group-containing amine is a compound represented by the following Formula (I):
H₂N-R¹-O-R² (I)
(in Formula (I), R¹ represents a linear or branched alkylene group having 1 to 8 carbon atoms or a phenylene group, and R² represents a linear or branched alkyl group having 1 to 8 carbon atoms).

22. The antifouling coating material composition as described in claim 21, wherein the alkoxy group-containing amine is at least one selected from the group consisting of 3-ethoxypropylamine, 3-butoxypropylamine, 3-(2-ethylhexyloxy)propylamine, 3-lauryloxypropylamine, 3-stearyloxypropylamine, 4-(2-ethylhexyloxy)butylamine, 4-lauryloxybutylamine, 8-ethoxyoctylamine, 8-(2-ethylhexyloxy)octylamine, 2-ethylhexyloxyphenylamine and lauryloxyphenylamine.

23. The antifouling coating material composition as described in any of claims 1 to 2, wherein the amine compound (C) is contained in an amount of 0.1 to 3 moles per mole of the triphenylboron-amine complex (b1).

24. The antifouling coating material composition as described in any of claims 1 to 23, wherein the coating film-forming resin (A) is at least one selected from the group consisting of (meth)acrylic acid metal salt copolymers, trialkylsilyl acrylate (co)polymers, vinyl chloride base resins, vinyl chloride-vinyl acetate copolymers, vinyl chloride-vinyl isobutyl ether copolymers, chlorinated rubber base resins, chlorinated polyethylene resins, chlorinated polypropylene resins, acryl resins, styrene-butadiene base resins, polyester base resins, epoxy base resins, phenol base resins, synthetic rubbers, silicone rubbers, silicone base resins, petroleum base resins, rosin ester base resins, rosin base soaps and rosin.

25. The antifouling coating material composition as described in any of claims 1 to 24, further comprising, in addition to the triphenylboron-amine complex (b1), a different organic antifouling agent (b2) as the antifouling agent (B).

26. The antifouling coating material composition as described in claim 25, wherein the different organic antifouling agent (b2) is at least one selected from the group consisting of copper salt of 2-pyridinethiol-1-oxide (copper pyrithione), 2-pyridinethiol-1-oxide zinc salt (zinc pyrithione), 4,5-dichloro-2-n-octyl-4-isothiazoline-3-one, N,N-dimethyldichlorophenylurea, 2,4,6-trichlorophenylmaleimide, 2-methylthio-4-tert-butylamino-6-cyclopropyl-S-triazine, 2,4,5,6-tetrachloroisophthalonitrile, bisdimethyldithiocarbamoylzinc ethylenebisdithiocarbamate, chloromethyl-n-octyl disulfide, N,N'-dimethyl-N'-phenyl-(N-fluorodichloromethylthio)sulfamide, N,N'-dimethyl-N'-tolyl-(N-fluorodichloromethylthio)sulfamide, tetraalkylthiuram disulfide (the allyl group has 1 to 5 carbon atoms), zinc dimethyldithiocarbamate, zinc ethylenebisdithiocarbamate, 2,3-dichloro-N-(2',6'-diethylphenyl)maleimide, 2,3-dichloro-N-(2'-ethyl-6'-methylphenyl)maleimide and zinc sulfide.

27. The antifouling coating material composition as described in any of claims 1 to 26, further comprising at least one color pigment selected from the group consisting of red iron oxide, titan white, yellow iron oxide and organic pigments as the color pigment (D) in an amount of 0.05 to 125 parts by weight per 100 parts by weight of the coating film-forming resin (A) (solid content).

28. The antifouling coating material composition as described in any of claims 1 to 27, further comprising at least one extender pigment selected from the group consisting of talc, silica, mica, clay, zinc oxide, calcium carbonate, kaolin, alumina white, white carbon, aluminum hydroxide, magnesium carbonate, barium carbonate, barium sulfate and zinc sulfide as the extender pigment (E) in an amount of 2.5 to 250 parts by weight per 100 parts by weight of the coating film-forming resin (A) (solid content).

29. The antifouling coating material composition as described in any of claims 1 to 28, further comprising at least one inorganic dehydrating agent selected from the group consisting of anhydrite and gypsum hemihydrate (casting plaster) as the inorganic dehydrating agent (F) in an amount of 1.0 to 25 parts by weight per 100 parts by weight of the coating film-forming resin (A) (solid content).

30. The antifouling coating material composition as described in any of claims 1 to 29, further comprising at least one plasticizer selected from the group consisting of chlorinated paraffin and terpenephenol as the plasticizer (G) in an amount of 0.5 to 50 parts by weight per 100 parts by weight of the coating film-forming resin (A) (solid content).

31. The antifouling coating material composition as described in any of claims 1 to 30 further comprising at least one anti-sagging/anti-settling agent selected from the group consisting of respective amine salts, stearate salts, lecithin salts and alkylsulfonic acid salts of Al, Ca and Zn (organic clay base wax); polyethylene wax, amide wax, hydrogenated castor oil wax and polyamide wax (organic wax); mixtures of the organic clay base wax and the organic wax described above; and synthetic fine powder silica; polyethylene oxide base wax; and fatty acid amide wax as the anti-sagging/anti-settling agent (thixotropic agent) (H) in an amount of 0.25 to 50 parts by weight per 100 parts by weight of the coating film-forming resin (A) (solid content).

32. The antifouling coating material composition as described in any of claims 1 to 31, further comprising a compound represented by the following Formula [1a] in which a hydrophile-lipophile balance (HLB) is 2 to 12 as the oxyalkylene group-containing linear organopolysiloxane (I) in an amount of 0.5 to 200 parts by weight per 100 parts by weight of the coating film-forming resin (A) (solid content): 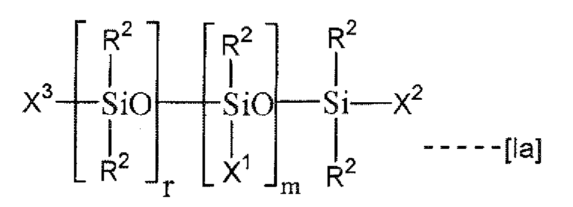 (in Formula [1a], X¹, X² and X³ each represent independently a polyether group: -R-A-(R³O)ₙ-R⁴(R represents an alkylene group having 1 to 5 carbon atoms; A represents a single bond or an oxygen atom; R³ represents an alkylene group having 1 to 5 carbon atoms; R⁴ represents an alkyl group having 1 to 5 carbon atoms or hydrogen; and n represents a repeating unit number) or an alkyl group having 1 to 5 carbon atoms; at least one of X¹, X² and X³ is the polyether group described above: -R-A-(R³O)ₙ-R⁴; R² represents an alkyl group having 1 to 3 carbon atoms; r and m each represent a repeating unit total number, and a bonding order of the repeating units [-Si(R²)₂O-] and [-Si(R²) (X¹)O-] may be optional).

33. The antifouling coating material composition as described in claim 2, further comprising, if necessary, at least one of polybutenes, paraffins, vaselines and a dialkyl sulfide compound represented by the following Formula (VI) as the plastic resin (J) in an amount of 5 to 100 parts by weight per 100 parts by weight of the coating film-forming resin (A) (solid content):
R^{3d}-(S)ₙ-R^{3e} (VI)
(in Formula (VI), plural R^{3d} and R^{3e} may be the same as or different from each other and each represent a linear or branched alkyl group having 1 to 20 carbon atoms, and n represents an integer of 1 to 20).

34. An antifouling agent set comprising a triphenylboron-amine complex (b1) as an antifouling agent (B) and an amine compound (C) (excluding the triphenylboron-amine complex (b1); hereinafter the same shall apply) as a decomposition inhibitor for the triphenylboron-amine complex (b1), and it further comprises, if necessary, a solvent (M) which can dissolve the above components (b1) and (C); and the amine compound (C) is contained in an amount of 1 to 210 parts by weight per 100 parts by weight of the triphenylboron-amine complex (b1).

35. The antifouling agent set as described in claim 34, wherein the triphenylboron-amine complex (b1) is the triphenylboron-amine complex used for the antifouling coating material composition as described in any of claims 17 to 22.

36. The antifouling agent set as described in any of claims 34 to 35, wherein the amine compound (C) is the amine compound used for the antifouling coating material composition as described any of claims 5 to 16.

37. An antifouling coating film comprising the antifouling coating material composition as described in any of claims 1 to 33.

38. A substrate provided with a coating film **characterized by** that a surface of the substrate is coated with a coating film obtained by curing the antifouling coating material composition as described in any of claims 1 to 33.

39. An antifouling substrate **characterized by** that a surface of the substrate brought into contact with seawater or refined water is coated with a coating film obtained by curing the antifouling coating material composition as described in any of claims 1 to 33.

40. The antifouling substrate as described in claim 39, wherein the substrate is any of an underwater structure, a ship outside plate, a fishing net and a fishing equipment.

41. A method for forming a coating film on a surface of a substrate **characterized by** coating or impregnating a surface of a substrate with the antifouling coating material composition as described in any of claims 1 to 33 and then curing it to form a coating film.

42. An antifouling method for a substrate **characterized by** coating or impregnating a surface of a substrate with the antifouling coating material composition as described in any of claims 1 to 33 and then curing the above antifouling coating material to form an antifouling coating film.

43. The antifouling method for a substrate a as described in claim 42, wherein the substrate is any of an underwater structure, a ship outside plate, a fishing net and a fishing equipment.

44. An inhibiting and controlling method for decomposition of a triphenylboron-amine complex **characterized by** adding the amine compound (C) (excluding the triphenylboron-amine complex (b1)) to the triphenylboron-amine complex (b1) or a material containing the triphenylboron-amine complex (b1).

45. The inhibiting and controlling method for decomposition of a triphenylboron-amine complex as described in claim 44, wherein the triphenylboron-amine complex (b1) is the triphenylboron-amine complex used for the antifouling coating material composition as described in any of claims 17 to 22.

46. The inhibiting and controlling method for decomposition of a triphenylboron-amine complex as described in claim 44, wherein the amine compound (C) is the amine compound used for the antifouling coating material composition as described in any of claims 5 to 16.
